# EUROPEAN PATENT SPECIFICATION

(11) **EP 3 793 110 B1**
(45) Date of publication and mention of the grant of the patent: **30.08.2023**
(21) Application number: 19800841.9
(22) Date of filing: 05.05.2019
(51) Int. Cl.: H04L 1/00

(54) **MCS TABLE DETERMINATION METHOD, TERMINAL, AND BASE STATION AND READABLE STORAGE MEDIUM**
VERFAHREN ZUR BESTIMMUNG VON MCS-TABELLEN, ENDGERÄT UND BASISSTATION UND LESBARES SPEICHERMEDIUM
PROCÉDÉ DE DÉTERMINATION DE TABLE MCS, TERMINAL, STATION DE BASE ET SUPPORT DE STOCKAGE LISIBLE

(30) Priority: 11.05.2018 CN 201810449340
(43) Date of publication of application: 17.03.2021
(73) Proprietor: Datang Mobile Communications Equipment Co., Ltd., Beijing 100083 (CN)
(72) Inventor: BAI, Wei, Beijing 100191 (CN); XING, Yanping, Beijing 100191 (CN); GAO, Xuejuan, Beijing 100191 (CN)
(74) Representative: Cabinet Nony
(86) International application number: PCT/CN2019/085575
(87) International publication number: WO 2019/214554

(56) References cited:
- EP-A1- 2 879 427
- WO-A1-2014/110467
- WO-A1-2016/164074
- CN-A- 104 243 104
- CN-A- 104 509 012
- CN-A- 107 888 330
- MEDIATEK INC: "MCS and CQI Tables design for URLLC", 3GPP DRAFT; R1-1801676_MCS AND CQI TABLES DESIGN FOR URLLC_MEDIATEK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG1, no. Athens, Greece; 20180226 - 20180302 17 February 2018 (2018-02-17), XP051397677, Retrieved from the Internet: URL:http://www.3gpp.org/ftp/tsg%5Fran/WG1% 5FRL1/TSGR1%5F92/Docs/ [retrieved on 2018-02-17]
- ERICSSON: "CQI and MCS tables for URLLC", 3GPP DRAFT; R1-1801563 CQI AND MCS TABLES FOR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 17 February 2018 (2018-02-17), XP051397603, Retrieved from the Internet: URL:http://www.3gpp.org/ftp/tsg%5Fran/WG1% 5FRL1/TSGR1%5F92/Docs/ [retrieved on 2018-02-17]
- ERICSSON: "CQI and MCS Tables for URLLC", 3GPP DRAFT; R1-1803919 CQI AND MCS TABLES FOR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sanya, P.R. China; 20180416 - 20180420 15 April 2018 (2018-04-15), XP051426212, Retrieved from the Internet: URL:http://www.3gpp.org/ftp/Meetings%5F3GP P%5FSYNC/RAN1/Docs/ [retrieved on 2018-04-15]
- NTT DOCOMO: "Views on CQI and MCS Tables", 3GPP TSG RAN WG1 Meeting 90bis R1-1718194, vol. RAN WG1, 13 October 2017 (2017-10-13) , pages 1-2, XP051352902, Prague, CZ;
- NTT DOCOMO: "Remaining Issues on CQI and MCS", 3GPP TSG RAN WG1 Meeting AH 1801 R1-1800662, vol. RAN WG1, 13 January 2018 (2018-01-13) , XP051384984,
- 3gpp Etsi: "ETSI TS 36.213 version 12.5.0 Release 12", , 1 April 2015 (2015-04-01), pages 58-66, XP055884156, Retrieved from the Internet: URL:https://www.etsi.org/deliver/etsi_ts/1 36200_136299/136213/12.05.00_60/ts_136213v 120500p.pdf [retrieved on 2022-01-26]

## Description

The present application claims priority to the Chinese Patent Application filed with the Chinese Patent Office on May 11, 2018 with the No. 201810449340.0 and entitled "MCS TABLE DETERMINATION METHOD, TERMINAL, AND BASE STATION AND READABLE STORAGE MEDIUM".

### Field

The present disclosure relates to the field of computers, and in particular to methods for determining an MCS table, a terminal, and a base station.

### Background

At present, with the development of mobile communication service requirements, in a 5 Generation New RAT (5G NR) system, a new transmission scheme is provided on the basis of communication requirements for low latency and high reliability, i.e., ultra-reliable low latency connection (URLLC) service. A corresponding modulation and coding scheme (MCS) table is newly defined for the URLLC service, then the 5G NR system includes more MCS tables, including MCS tables corresponding to 64-phase quadrature amplitude modulation (QAM), 256QAM, and a bler (block error rate)-Target of 10⁻⁵, and possibly the MCS tables corresponding to the bler-Target of 10⁻¹ or other values.

For a terminal, enhanced Mobile Broadband (eMBB) service and URLLC service may be supported at the same time, and URLLC service may also correspond to the plurality of different bler-Targets, e.g., for the URLLC service, the bler-Target at initial transmission may be 10⁻¹, while the bler-Target at retransmission may be 10⁻⁵. At present, for eMBB, radio resource control (RRC) signaling includes an information element (IE) used to indicate the MCS tables, namely the modulation and coding scheme table (mcs-Table) which takes one bit, that is, two MCS table types may be indicated corresponding to the two MCS table types of eMBB, namely 64QAM and 256QAM. However, the MCS table defined for URLLC cannot be indicated at present, so that the terminal cannot determine the currently used MCS table, and thus a communication process cannot be accurately carried out, and user experience is not good.

R1-1801676, titled MCS and CQI Tables design for URLLC_MediaTek, discloses the design of the MCS and CQI tables for URLLC.

R1-1801563, titled CQI and MCS tables for URLLC, discusses the design of CQI and MCS tables for URLLC.

R1-1803919, titled CQI and MCS Tables for URLLC, discusses different aspects of CQI and MCS tables suitable for URLLC. TBS determination is also discussed briefly.

The patent application EP2879427A1 discloses a method and device for transmitting MCS indication information. The method includes according to the channel quality and a first MCS table, a network side determining an MCS grade corresponding to a channel assigned to a terminal; and by means of first indication information, notifying the terminal of the determined MCS grade, so as to indicate to the terminal to determine a modulation scheme and code rate used by the channel assigned thereto according to the MCS grade, wherein the first MCS table at least contains corresponding records of an MCS index and a TBS index corresponding to a modulation scheme with a modulation order greater than 6. The embodiments of the present application introduce a higher-order modulation scheme into an existing LTE/LTE-A system, improving the spectrum efficiency.

The patent application WO2014110467A1 discloses systems, methods and/or techniques for improving downlink spectrum efficiency. For example, a higher order modulation transmission may be configured to be indicated by the network or a device. Additionally, multiple modulation and coding scheme (MCS) tables, transport block size (TBS) tables, and/or channel quality index (CQI) tables may be provided to support the higher order modulation transmission.

### Summary

Embodiments of the present disclosure provides methods for determining an MCS table, a terminal, and a base station, used to determine an MCS table to be used in a communication process from a plurality of MCS tables. The invention is set out in the appended set of claims.

### Brief Description of the Drawings

Fig. 1 is a schematic diagram of a method for determining an MCS table provided by an embodiment of the present disclosure.
Fig. 2 is a schematic diagram of a structure of a terminal provided by an embodiment of the present disclosure
Fig. 3 is a schematic diagram of a structure of a base station provided by an embodiment of the present disclosure.
Fig. 4 is a schematic diagram of another structure of a terminal provided by a non-claimed example of the present disclosure.
Fig. 5 is a schematic diagram of another structure of a base station provided by a non-claimed example of the present disclosure.

### Detailed Description of the Embodiments

In order to make objectives, technical solutions, and advantages of embodiments of the present disclosure clearer, technical solutions of the embodiments of the present disclosure will be described in combination with accompanying drawings of embodiments of the present disclosure.

Technical background of the embodiments of the present disclosure is described below.

At present, for a terminal, eMBB service and URLLC service may be supported at the same time, and the URLLC service may also correspond to a plurality of different bler-Targets, e.g., for the URLLC service, the bler-Target at initial transmission may be 10⁻¹, while the bler-Target at retransmission may be 10⁻⁵. At present, for eMBB, RRC signaling includes an information element (IE) used to indicate MCS tables, namely an mcs-Table which takes one bit, that is, two MCS tables may be indicated corresponding to the two MCS table types of eMBB, namely 64QAM and 256QAM. However, the MCS table defined for URLLC cannot be indicated at present, so that the terminal cannot determine the currently used MCS table, and thus a communication process cannot be accurately carried out, and user experience is not good.

Therefore, an embodiment of the present disclosure provides a method for determining an MCS table. In the method, a first MCS table indicated by indication information is one of a first type of MCS tables and a second type of MCS tables . That is, the indication information indicates a plurality of MCS table types, such as the MCS table corresponding to eMBB and the MCS table corresponding to URLLC, so that the terminal correctly determines the MCS table used by current service, and thus the correct proceeding of the communication process is ensured, and the quality of user communication experience is enhanced.

The technical solutions provided by the embodiments of the present disclosure are introduced below in combination with the accompanying drawings.

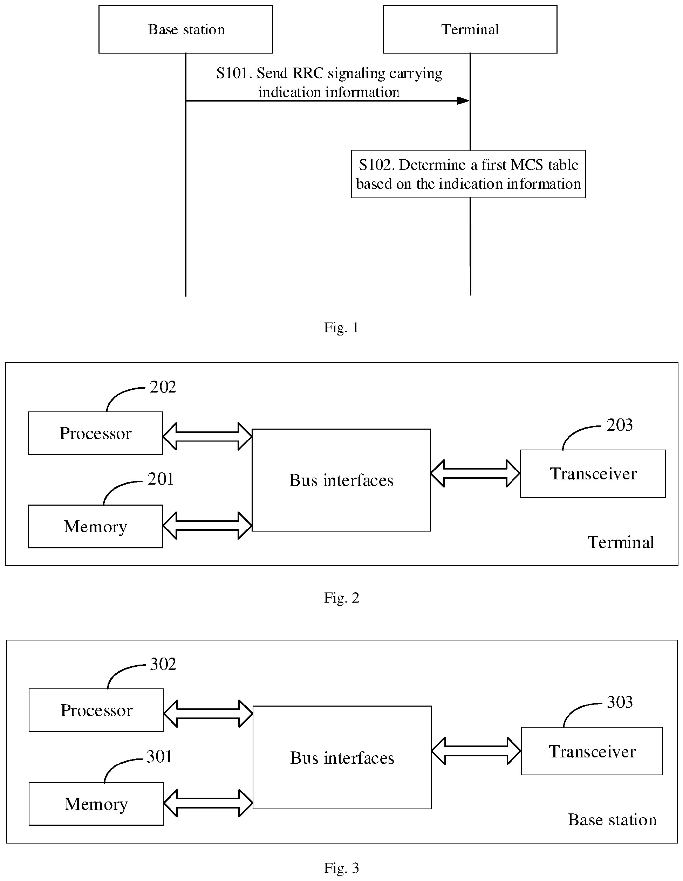

Referring to Fig. 1, an embodiment of the present disclosure provides a method for determining an MCS table, which is performed by a base station and a terminal provided by the embodiments of the present disclosure. Since interaction between the base station and the terminal is involved, the methods of the base station and the terminal will be described together in following process description of the methods.

S101, the base station sends RRC signaling carrying indication information to the terminal, and the terminal receives the RRC signaling.

In the embodiments of the present disclosure, in order to enable the terminal to correctly acquire an MCS table used in a current communication process, the base station needs to indicate the used MCS table to the terminal, so that the base station sends the indication information to the terminal by carrying the indication information in the RRC signaling, where the indication information is used to indicate the used first MCS table.

Specifically, in the related art, eMBB service also corresponds to two MCS tables, namely 64QAM and 256QAM, and the two MCS tables corresponding to the eMBB service are referred to as a first type of MCS tables. In addition, at present, one or more MCS tables can also be newly added for URLLC service, for example, the newly added tables may include the MCS tables corresponding to the bler-Target of 10⁻⁵ and the MCS tables corresponding to the bler-Target of 10⁻¹ or other values, and the one or more MCS tables corresponding to the URLLC service are referred to herein as a second type of MCS tables, so that the first MCS table may be one of the first type of MCS tables and the second type of MCS tables.

S102, the terminal determines the first MCS table based on the indication information.

In the embodiments of the present disclosure, after the terminal receives the RRC signaling carrying the indication information sent by the base station, the indication information in the RRC signaling is obtained, so that the terminal determines the first MCS table on the basis of the indication information.

Specifically, there may be various embodiments of the indication information, which will be described separately below.

### Embodiment 1.

In the embodiments of the present disclosure, the indication information is a cqi-Table, where the cqi-Table takes two bits, so that the two bits of the cqi-Table may have four values, the different values of the cqi-Table are used to indicate the different MCS tables, and one value corresponds to one MCS table. For example, the four values may be "00", "01", "10" and "11", and then may correspond to at most four MCS tables. For example, the first two values may correspond to the MCS tables included in the first type of MCS tables, i.e., "00" corresponds to 64QAM and "01" corresponds to 256QAM, and the latter two values may be used to correspond to the MCS tables included in the second type of MCS tables, of course, when there is only one MCS table included in the second type of MCS tables, the last value may be a blank value, i.e. not corresponding to any MCS table. Under the condition that the second type of MCS tables only includes the MCS table corresponding to the bler-Target of 10⁻⁵, "10" may be used to correspond to the MCS table corresponding to the bler-Target of 10⁻⁵.

In the embodiments of the present disclosure, after the base station determines the first MCS table configured for the terminal, the cqi-Table sent to the terminal is set to a corresponding value, and the terminal also determines the first MCS table corresponding to the value of the cqi-Table according to the received value of the cqi-Table.

For example, under the condition that the base station determines that the first MCS table configured for the terminal is 64QAM, the base station sets the cqi-Table to be "00". Correspondingly, after the terminal receives the cqi-Table, it can be detected that the value of the cqi-Table is "00", and the terminal can determine that a channel quality indicator (CQI) is 64QAM, and meanwhile can know that the first MCS table is 64QAM.

Or, under the condition that the base station determines that the first MCS table configured for the terminal is 256QAM, the base station sets the cqi-Table to be "01". Correspondingly, after the terminal receives the cqi-Table, it can be detected that the value of the cqi-Table is "01", and the terminal can determine that the CQI is 256QAM and meanwhile can know that the first MCS table is 256QAM.

Or, under the condition that the base station determines that the first MCS table configured for the terminal is the MCS table corresponding to the bler-Target of 10⁻⁵ , the base station sets the cqi-Table to be "10". Correspondingly, after the terminal receives the cqi-Table, it can be detected that the value of the cqi-Table is "10", and the terminal can determine that the CQI is the CQI corresponding to the bler-Target of 10⁻⁵, and meanwhile can know that the first MCS table is the MCS table corresponding to the bler-Target of 10⁻⁵.

It should be noted that Embodiment 1 may be applied to the case where one CQI is configured.

### Embodiment 2.

In the embodiments of the present disclosure, the indication information also indicates the type of the first MCS table, and then the terminal determines the type of the first MCS table on the basis of the indication information.

Specifically, the type of the first MCS table may be determined through the condition whether the indication information carries the bler-Target or not. Wherein when the indication information carries the bler-Target, it can be indicated that the current service is URLLC, that is, the first MCS table is the second type of MCS tables; otherwise, under the condition that the indication information does not carry the bler-Target, it can be indicated that the current service is eMBB, that is, the first MCS table is the first type of MCS tables. For example, the indication information may be a channel quality information configuration report (CSI-Report Config) that is used to indicate that the first MCS table is the first type of MCS tables when the bler-Target is not included in the CSI-Report Config, or that is used to indicate that the first MCS table is the second type of MCS tables when the bler-Target is included in the CSI-Report Config.

Therefore, when the base station determines that the first MCS table configured for the terminal is the first type of MCS tables, the base station determines that the bler-Target does not need to be carried in the indication information, and correspondingly, after the terminal receives the indication information, when it is determined that the bler-Target is not carried in the indication information, the first MCS table is determined to be the first type of MCS tables.

Or, when the base station determines that the first MCS table configured for the terminal is the second type of MCS tables, the base station determines that the bler-Target needs to be carried in the indication information; and correspondingly, after the terminal receives the indication information, when it is determined that the bler-Target is carried in the indication information, the first MCS table is determined to be the second type of MCS tables.

Specifically, the type of the first MCS table can also be jointly determined through the bler-Target and the cqi-Table carried by the indication information. Wherein when the bler-Target is the first value, the bler-Target is used to indicate that the first MCS table is the second type of MCS tables; or, when the bler-Target is the second value, the bler-Target is used to indicate that the first MCS table is the second type of MCS tables, and the first value and the second value are respectively used to indicate different MCS tables included in the second type of MCS tables; or, when the bler-Target is the second value, the bler-Target is used to indicate that the first MCS table is the first type of MCS tables.

The bler-Target includes at least one value, i.e. may include 10⁻⁵, and may also include 10⁻¹ and other values.

The cqi-Table includes two bits, and the plurality of values of the cqi-Table are called C1, C2, C3 and C4 in implementation; the cqi-Table may have a plurality of definition modes; the first definition mode is that C1 corresponds to 64QAM, C2 corresponds to 256QAM, C3 corresponds to URLLC new1, and C4 corresponds to URLLC new2, that is, two MCS table types are defined for URLLC, wherein URLLC new1 refers to the MCS table corresponding to the bler-Target of 10⁻⁵, and URLLC new2 refers to the MCS table corresponding to the bler-Target of 10⁻¹; the second definition mode is that C1 corresponds to 64QAM, C2 corresponds to 256QAM, and C3 corresponds to URLLC new and C4 is a blank value, that is, one MCS table type is defined for URLLC, and URLLC new refers to the MCS table corresponding to the bler-Target of 10⁻⁵; and the third definition mode is that C1 corresponds to 64QAM or URLLC new, C2 corresponds to 256QAM or URLLC new, and C3 and C4 are the blank values.

Determination of the type of the first MCS table through the bler-Target and the cqi-Table together is described below under the condition that the bler-Target includes 10⁻⁵ and 10⁻¹, and the cqi-Table is defined in the first mode.

When the value of the bler-Target received by the terminal is the first value, i.e., the bler-Target is determined to be 10⁻⁵, the terminal can directly determine that the first MCS table is the second type of MCS tables.

When the value of the bler-Target received by the terminal is the second value, i.e., the bler-Target is determined to be 10⁻¹, the terminal can directly determine the type of the first MCS table on the basis of the value of the cqi-Table. Wherein when the value of the cqi-Table is C1 or C2, the terminal can determine that the first MCS table is the first type of MCS tables, and when the value of the cqi-Table is C3 or C4, the terminal can determine that the first MCS table is the second type of MCS tables.

In the embodiments of the present disclosure, after the terminal determines the type of the first MCS table, the first MCS table can be determined on the basis of the mcs-Table carried by the indication information.

Wherein the mcs-Table is defined in the related art, and the two effective values of the mcs-Table correspond to 64QAM and 256QAM, respectively. However, since the MCS table corresponding to URLLC is added at present, the mcs-Table is not merely used to indicate the two tables corresponding to the eMBB. Specifically, when the first MCS table is the first type of MCS tables, the value of the mcs-Table is in one-to-one correspondence with each MCS table in the first type of MCS tables; or when the first MCS table is the second type of MCS tables, the value of the mcs-Table is in one-to-one correspondence with each MCS table in the second type of MCS tables.

Specifically, when the terminal determines that the first MCS table is the first type of MCS tables, the terminal determines the first MCS table from the first type of MCS tables on the basis of the value of the mcs-Table.

For example, under the condition that the terminal detects that the bler-Target is not carried in the indication information, the terminal can determine that the first MCS table is the first type of MCS tables, and then the terminal can determine the first MCS table from the first type of MCS tables, i.e., when the value of the mcs-Table is "0", the terminal can determine that the first MCS table is 64QAM, or when the value of the mcs-Table is "1", the terminal can determine that the first MCS table is 256QAM.

Or, under the condition that the terminal detects that the value of the bler-Target carried by the indication information is "00", the terminal can determine that the bler-Target is 10⁻¹, and under the condition that the terminal determines that the value of the cqi-Table is "00" or "01", namely C1 or C2, the terminal can determine that the first MCS table is the first type of MCS tables, and then the terminal can determine the first MCS table from the first type of MCS tables, that is, when the value of the mcs-Table is "0", the terminal can determine that the first MCS table is 64QAM, or, when the value of the mcs-Table is "1", the terminal can determine that the first MCS table is 256QAM.

Specifically, when the terminal determines that the first MCS table is the second type of MCS tables, the terminal determines the first MCS table from the second type of MCS tables according to the value of the mcs-Table.

For example, under the condition that the terminal detects that the bler-Target is carried in the indication information, the terminal can determine that the first MCS table is the second type of MCS tables, and then the terminal can determine the first MCS table from the second type of MCS tables, i.e., when the value of the mcs-Table is "0", the terminal can determine that the first MCS table is the MCS table corresponding to the bler-Target of 10⁻⁵, or when the value of the mcs-Table is "1", the terminal can determine that the first MCS table is the MCS table corresponding to the bler-Target of 10 '.

Or, under the condition that the terminal detects that the value of the bler-Target carried by the indication information is "01", the terminal can determine that the bler-Target is 10⁻⁵, and then the current service is the URLLC service. Under the condition that the terminal determines that the value of the cqi-Table is "10" or "11", namely C3 or C4, the terminal can determine that the first MCS table is the second type of MCS tables, and then the terminal can determine the first MCS table from the second type of MCS tables, that is, when the value of the mcs-Table is "0", the terminal can determine that the first MCS table is the MCS table corresponding to the bler-Target of 10⁻⁵, or when the value of the mcs-Table is "1", the terminal can determine that the first MCS table is the MCS table corresponding to the bler-Target of 10⁻¹.

Correspondingly, the base station can set the values of the bler-Target, the cqi-Table and the mcs-Table for the type of the first MCS table and specifically for which MCS table.

It should be noted that Embodiment 2 may be applied to the case where two CQIs are configured.

### Embodiment 3.

In the embodiments of the present disclosure, the MCS table corresponding to the URLLC is defined for the URLLC, so that the newly defined field new-mcs-Table is also added in the RRC signaling, and the new field is specially used to indicate the second type of MCS tables. Of course, the name of the field can also be set to other possible names, and the subject of the embodiment of the present disclosure is to illustrate a thought thereof and not to limit the specific embodiments.

Wherein when the new-mcs-Table is carried in the indication information, it is indicated that the used MCS table is the second type of MCS tables, and if the new-mcs-Table is not carried in the indication information, it is indicated that the used MCS table is the first type of MCS tables.

In the embodiments of the present disclosure, the base station determines the type of the first MCS table configured for the terminal so as to determine whether the new-mcs-Table needs to be carried in the indication information or not.

Specifically, when the base station determines that the first MCS table is the first type of MCS tables, the base station determines that the new-mcs-Table does not need to be carried in the indication information. Correspondingly, after the terminal receives the indication information, it can also be detected that the new-mcs-Table is not carried in the indication information, and then the terminal determines the first MCS table on the basis of the mcs-Table carried in the indication information.

Specifically, when the base station determines that the first MCS table is the second type of MCS tables, the base station determines that the new-mcs-Table needs to be carried in the indication information. Correspondingly, after the terminal receives the indication information, it can also be detected that the new-mcs-Table is carried in the indication information, and then the terminal determines that the first MCS table is the second type of MCS tables, and the terminal determines the first MCS table on the basis of the value of the new-mcs-Table.

For example, when the terminal detects the new-mcs-Table in the indication information and the value of the new-mcs-Table is "0", the terminal can determine that the first MCS table is the MCS table of the URLLC new1, i.e., the MCS table corresponds to the bler-Target of 10⁻⁵.

Or, when the terminal detects the new-mcs-Table in the indication information and the value of the new-mcs-Table is "1", the terminal can determine that the first MCS table is the MCS table of the URLLC new2, i.e., the MCS table corresponds to the bler-Target of 10⁻¹.

The mcs-Table is inevitably carried in the current indication information, and when the new-mcs-Table is also carried in the indication information, it can be considered that the mcs-Table is invalid.

Of course, it may be possible to configure the attribute of the mcs-Table as an optional attribute and configure the attribute of the new-mcs-Table as an optional attribute; then it may be considered that the first MCS table is the second type of MCS tables when the new-mcs-Table is carried and the mcs-Table is not carried in the indication information; and it may be considered that the first MCS table is the first type of MCS tables when the mcs-Table is carried and the new-mcs-Table is not carried in the indication information.

It should be noted that Embodiment 3 may be applied to the case where the plurality of CQIs are configured.

### Embodiment 4.

In the embodiments of the present disclosure, the mcs-Table in the related art can be expanded, for example, the existing mcs-Table is expanded from one bit to two bits so as to support more MCS tables; and then the indication information is also the mcs-Table, wherein the mcs-Table includes at least two bits, the different values of the mcs-Table are used to indicate the different MCS tables, and one value corresponds to one MCS table.

Specifically, after the base station determines the first MCS table configured for the terminal, the mcs-Table sent to the terminal is set to the corresponding value, and the terminal also determines the first MCS table corresponding to the value of the mcs-Table on the basis of the received value of the mcs-Table.

For example, under the condition that the base station determines that the first MCS table configured for the terminal is 64QAM, the base station sets the mcs-Table to be "00". Correspondingly, after the terminal receives the mcs-Table, it can be detected that the value of the mcs-Table is "00", and the terminal can also determine that the first MCS table is 64QAM.

Or, under the condition that the base station determines that the first MCS table configured for the terminal is 256QAM, the base station sets the mcs-Table to be "01". Correspondingly, after the terminal receives the mcs-Table, it can be detected that the value of the mcs-Table is "01", and the terminal can also determine that the first MCS table is 256QAM.

Or, under the condition that the base station determines that the first MCS table configured for the terminal is the MCS table corresponding to the bler-Target of 10⁻⁵, the base station sets the mcs-Table to be "10". Correspondingly, after the terminal receives the mcs-Table, it can be detected that the value of the mcs-Table is "10", and the terminal can also determine that the first MCS table is the MCS table corresponding to the bler-Target of 10⁻⁵.

### Embodiment 5.

In the embodiments of the present disclosure, in order to distinguish the MCS tables corresponding to the eMBB and the URLLC, the field service-Table is newly defined, wherein the service-Table includes at least one bit and used to indicate the type of the MCS table.

Specifically, after the base station determines the first MCS table configured for the terminal, the base station knows the type of the first MCS table so as to assign a corresponding value to the service-Table and send the service-Table to the terminal. Correspondingly, after receiving the service-Table, the terminal knows the type of the first MCS table on the basis of the value of the service-Table.

In the embodiments of the present disclosure, when the service-Table is not carried in the RRC signaling sent by the base station, the indicated first MCS table is the first type of MCS tables by default.

In the embodiments of the present disclosure, although the type of the first MCS table is indicated through the service-Table, the terminal cannot determine that which MCS table is the first MCS table, so that in order to accurately determine that which MCS table is the first MCS table by the terminal, the base station also needs to indicate that which MCS table is the first MCS table to the terminal. Of course, under the condition that the second type of MCS tables only includes one MCS table, the terminal directly determines that the first MCS table is the only MCS table in the second table type after determining that the first MCS table is the second type of MCS tables on the basis of the service-Table.

### First Indication Mode.

The base station indicates the MCS tables included in the second type of MCS tables through the newly defined field new-mcs-Table and indicate the MCS tables included in the first type of MCS tables through the mcs-Table.

Specifically, under the condition that the first MCS table is the second type of MCS tables, the base station indicates the different MCS tables included in the second type of MCS tables to the terminal by carrying the new-mcs-Table in the indication information and then assigning different values to the new-mcs-Table. And after receiving the new-mcs-Table, the terminal determines a first MCS value from the second type of MCS tables according to the new-mcs-Table value, wherein the new-mcs-Table value is in one-to-one correspondence with each MCS table in the second type of MCS tables.

Specifically, under the condition that the first MCS table is the first type of MCS tables, the base station still indicates the different MCS tables included in the first type of MCS tables to the terminal through the mcs-Table. And after the terminal receives the mcs-Table, the terminal determines the first MCS value from the first type of MCS tables on the basis of the value of the mcs-Table, wherein the value of the mcs-Table is in one-to-one correspondence with each MCS table in the first type of MCS tables.

### Second Indication Mode.

The base station indicates the MCS tables included in the first type of MCS tables or the MCS tables included in the second type of MCS tables through the mcs-Table.

Specifically, under the condition that the first MCS table is the second type of MCS tables, the value of the mcs-Table carried by the indication information sent by the base station to the terminal is in one-to-one correspondence with each MCS table in the second type of MCS tables, that is, the first MCS table is jointly determined through the service-Table and the mcs-Table. And after the terminal receives the indication information, firstly, the first MCS table is determined to be the second type of MCS tables on the basis of the value of the service-Table, and then the first MCS table is determined from the second type of MCS tables on the basis of the value of the mcs-Table.

Under the condition that the type indicated by the service-Table is the first type of MCS tables, the value of the mcs-Table carried by the indication information sent to the terminal by the base station is in one-to-one correspondence with each MCS table in the first type of MCS tables. And after the terminal receives the indication information, firstly, the first MCS table is determined to be the first type of MCS tables according to the value of the service-Table, and then the first MCS table is determined from the first type of MCS tables according to the value of the mcs-Table.

In the embodiments of the present disclosure, the base station can also send a MCS index to the terminal through a physical downlink control channel (PDCCH), and correspondingly, the terminal can also receive the MCS index through the PDCCH, so that the terminal can determine the MCS value according to the MCS index and the determined first MCS table, and then detect a physical uplink shared channel (PUSCH) and a physical downlink shared channel (PDSCH) on the basis of the determined MCS value.

In the embodiments of the present disclosure, a semi-static indication mode is also provided for the newly added MCS table, so that the terminal can correctly determine the MCS table used by the current service, and thus the correct proceeding of the communication process is ensured, and the quality of user communication experience is improved.

Referring to Fig. 2, based on the same inventive concept, an embodiment of the present disclosure also provides a terminal including a memory 201, a processor 202, and a transceiver 203. The memory 201 and the transceiver 203 are connected to the processor 202 via a bus interface (which is taken as an example in Fig. 2), or connected to the processor 202 through a special connection line.

The memory 201 is configured to store one or more programs. The transceiver is configured to receive and transmit data under the control of the processor. The processor 202 is configured to read the programs in the memory 201, to execute the following processes: radio resource control (RRC) signaling sent by the base station and carrying indication information is received through the transceiver, wherein the indication information is used to indicate a first MCS table, and the first MCS table is one of a first type of MCS tables and a second type of MCS tables; and the first MCS table is determined on the basis of the indication information.

Under the condition that the indication information is a cqi-Table, the processor 202 is specifically configured to: determine the first MCS table corresponding to the value of the cqi-Table on the basis of the value of the cqi-Table, wherein the different values of the cqi-Table are used to indicate the different MCS tables, and one value corresponds to one MCS table.

The processor 202 is specifically configured to: determine the type of the first MCS table on the basis of the indication information; and determine the first MCS table from the first type of MCS tables on the basis of an mcs-Table carried by the indication information, under the condition that the first MCS table is determined to be the first type of MCS tables, wherein the value of the mcs-Table is in one-to-one correspondence with each MCS table in the first type of MCS tables; or determine the first MCS table from the second type of MCS tables on the basis of the mcs-Table carried by the indication information, under the condition that the first MCS table is determined to be the second type of MCS tables, wherein the value of the mcs-Table is in one-to-one correspondence with each MCS table in the second type of MCS tables.

The processor 202 is specifically configured to: determine whether the indication information carries a bler-Target or not; and determine the first MCS table to be the first type of MCS tables, when it is determined that the indication information does not carry the bler-Target; and when it is determined that the indication information carries the bler-Target, determine the first MCS table to be the second type of MCS tables.

The processor 202 is specifically configured to: determine the first MCS table to be the second type of MCS tables, when the bler-Target carried by the indication information is determined to be a first value; or determine the type of the first MCS table on the basis of the value of the CQI-Table carried by the indication information, when the bler-Target carried by the indication information is determined to be a second value.

The processor 202 is specifically configured to: determine the first MCS table from the second type of MCS tables on the basis of the value of a new-mcs-Table, under the condition that it is determined that the indication information caries the newly defined new-mcs-Table used to indicate the second type of MCS tables, wherein the value of the new-mcs-Table is in one-to-one correspondence with each MCS table in the second type of MCS tables; or determine the first MCS table from the first type of MCS tables on the basis of the value of the mcs-Table carried by the indication information, under the condition that it is determined that the indication information does not carry the new-mcs-Table, wherein the value of the mcs-Table is in one-to-one correspondence with each MCS table in the first type of MCS tables.

The processor 202 is specifically configured to: determine the type of the first MCS table on the basis of the service-Table carried by the indication information, wherein the service-Table is a newly defined field used to indicate the type of the MCS table, and the service-Table includes at least one bit; and determine the first MCS table from the second type of MCS tables on the basis of the value of the new-mcs-Table carried by the indication information, under the condition that the first MCS table is determined to be the second type of MCS tables, wherein the value of the new-mcs-Table is in one-to-one correspondence with each MCS table in the second type of MCS tables; or determine the first MCS table from the first type of MCS tables on the basis of the value of the mcs-Table carried by the indication information, under the condition that the first MCS table is determined to be the first type of MCS tables, wherein the value of the mcs-Table is in one-to-one correspondence with each MCS table in the first type of MCS tables.

The processor 202 is specifically configured to: determine the type of the first MCS table on the basis of the service-Table carried by the indication information, wherein the service-Table is the newly defined field used to indicate the type of the MCS table, and the service-Table includes at least one bit; and determine the first MCS table from the second type of MCS tables on the basis of the value of the mcs-Table carried by the indication information, under the condition that the first MCS table is determined to be the second type of MCS tables, wherein the value of the mcs-Table is in one-to-one correspondence with each MCS table in the second type of MCS tables; or determine the first MCS table from the first type of MCS tables on the basis of the value of the mcs-Table carried by the indication information, under the condition that the first MCS table is determined to be the first type of MCS tables, wherein the value of the mcs-Table is in one-to-one correspondence with each MCS table in the first type of MCS tables.

The processor 202 is specifically configured to: determine the type of the first MCS table on the basis of the service-Table carried by the indication information, wherein the service-Table is the newly defined field used to indicate the type of the MCS table, and the service-Table includes at least one bit; and determine the first MCS table to be the MCS table included in the second type of MCS tables, under the condition that the first MCS table is determined to be the second type of MCS tables, and the second type of MCS tables only includes one MCS table.

Under the condition that the indication information is the mcs-Table, the processor 202 is specifically configured to: determine the first MCS table corresponding to the value of the mcs-Table on the basis of the value of the mcs-Table, wherein the mcs-Table includes at least two bits, the different values of the mcs-Table are used to indicate the different MCS tables, and one value corresponds to one MCS table.

Optionally, the first type of MCS tables includes 64QAM and 236QAM; and the second type of MCS tables at lease includes the MCS table corresponding to the bler-Target of 10⁻³.

In Fig. 2, a bus architecture may comprise any numbers of buses and bridges connected to each other, and specifically, one or more processors represented by the processor 202 and various circuits of memories represented by the memory 201 are linked together. The bus architecture may also link other various circuits together, such as peripheral equipment, voltage stabilizers and power management circuits, which are all well known in this field, and thus will not be further described herein. Bus interfaces provide interfaces. The transceiver 203 may comprise a plurality of elements, namely including a transmitter and a receiver, and provides units communicating with other devices on a transmission medium. The processor 202 is responsible for managing the bus architecture and generally processing, and the memory 201 can store data used by the processor 202 when the processor performs operation.

Referring to Fig. 3, based on the same inventive concept, an embodiment of the present disclosure also provides a base station including a memory 301, a processor 302, and a transceiver 303. The memory 301 and the transceiver 303 are connected to the processor 302 via a bus interface (which is taken as an example in Fig. 3), or connected to the processor 302 through a special connection line.

The memory 301 is configured to store a program. The transceiver is configured to receive and transmit data under the control of the processor. The processor 302 is configured to read the program in the memory 301, to execute the following process: RRC signaling carrying indication information is sent to a terminal through a transceiver 303, and thus allowing the terminal to be able to determine a first MCS table on the basis of the indication information, wherein the indication information is used to indicate the first MCS table, and the first MCS table is one of a first type of MCS tables and a second type of MCS tables; and the indication information is a cqi-Table, wherein the different values of the cqi-Table are used to indicate the different MCS tables, and one value corresponds to one MCS table.

An mcs-Table is carried in the indication information; when the first MCS table is the first type of MCS tables, the value of the mcs-Table is in one-to-one correspondence with each MCS table in the first type of MCS tables; or when the first MCS table is the second type of MCS tables, the value of the mcs-Table is in one-to-one correspondence with each MCS table in the second type of MCS tables.

The processor 302 is further configured to: determine the type of the first MCS table; and determine that a bler-Target does not need to be carried in the indication information, when the first MCS table is determined to be the first type of MCS tables; or determine that the bler-Target needs to be carried in the indication information, when the first MCS table is determined to be the second type of MCS tables.

When the bler-Target carried by the indication information is a first value, the bler-Target is used to indicate that the first MCS table is the second type of MCS tables; or when the bler-Target carried by the indication information is a second value, the bler-Target is used to indicate that the first MCS table is the second type of MCS tables, wherein the first value and the second value are used to indicate the different MCS tables included in the second type of MCS tables, respectively; or when the bler-Target carried by the indication information is the second value, the bler-Target is used to indicate that the first MCS table is the first type of MCS tables.

The processor 302 is further configured to: determine the type of the first MCS table; and determine that a newly defined new-mcs-Table used to indicate the second type of MCS tables needs to be carried in the indication information, when the first MCS table is determined to be the second type of MCS tables, wherein the value of the new-mcs-Table is in one-to-one correspondence with each MCS table in the second type of MCS tables; or determine that the new-mcs-Table does not need to be carried in the indication information, when the first MCS table is determined to be the first type of MCS tables.

The indication information includes a service-Table, wherein the service-Table is a newly defined field used to indicate the type of the MCS table, and the service-Table includes at least one bit; and under the condition that the type indicated by the service-Table is the second type of MCS tables, the indication information carries the new-mcs-Table, and the value of the new-mcs-Table is in one-to-one correspondence with each MCS table in the second type of MCS tables; or under the condition that the type indicated by the service-Table is the first type of MCS tables, the indication information does not carry the new-mcs-Table, and the value of the mcs-Table carried by the indication information is in one-to-one correspondence with each MCS table in the first type of MCS tables.

The indication information includes the service-Table, wherein the service-Table is the newly defined field used to indicate the type of the MCS table, and the service-Table includes at least one bit; and under the condition that the type indicated by the service-Table is the second type of MCS tables, the value of the mcs-Table carried by the indication information is in one-to-one correspondence with each MCS table in the second type of MCS tables; or under the condition that the type indicated by the service-Table is the first type of MCS tables, the value of the mcs-Table is in one-to-one correspondence with each MCS table in the first type of MCS tables.

The indication information includes the service-Table, wherein the service-Table is the newly defined field used to indicate the type of the MCS table, and the service-Table includes at least one bit; and under the condition that the type indicated by the service-Table is the second type of MCS tables, and the second type of MCS tables only includes one MCS table, the first MCS table is the MCS table included in the second type of MCS tables.

The indication information is the mcs-Table, wherein the mcs-Table includes at least two bits, the different values of the mcs-Table are used to indicate the different MCS tables, and one value corresponds to one MCS table.

Optionally, the first type of MCS tables includes 64QAM and 256QAM; and the second type of MCS tables at lease includes the MCS table corresponding to the bler-Target of 10⁻⁵.

In the Fig. 3, a bus architecture may comprise any numbers of buses and bridges connected to each other, and specifically, one or more processors represented by the processor 302 and various circuits of memories represented by the memory 301 are linked together. The bus architecture may also link other various circuits together, such as peripheral equipment, voltage stabilizers and power management circuits, which are all well known in this field, and thus will not be further described herein. Bus interfaces provide interfaces. The transceiver 303 may comprise a plurality of elements, namely including a transmitter and a receiver, and provides units communicating with other devices on a transmission medium. The processor 302 is responsible for managing the bus architecture and generally processing, and the memory 301 can store data used by the processor 302 when the processor performs operation.

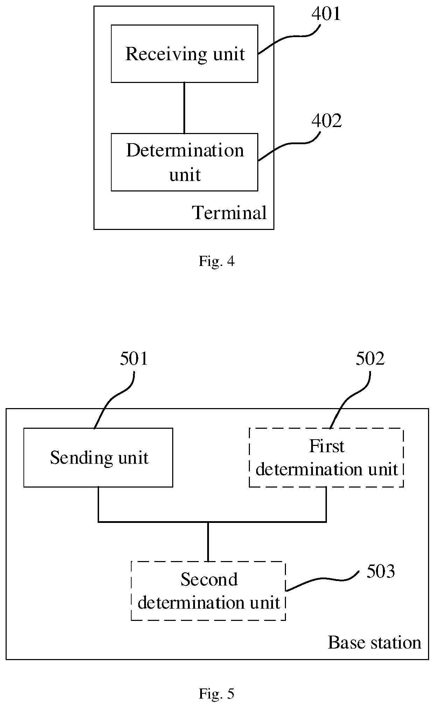

**The following embodiments illustrated in** **Fig. 4 and Fig. 5** **are not according to the invention and are present for illustration purposes only.**

Referring to Fig. 4, based on the same inventive concept, an embodiment of the present disclosure provides a terminal, including a receiving unit 401, configured to receive radio resource control (RRC) signaling carrying indication information and sent by a base station, wherein the indication information is used to indicate a first MCS table, and the first MCS table is one of a first type of MCS tables and a second type of MCS tables; and a determination unit 402, configured to determine the first MCS table on the basis of the indication information.

Optionally, under the condition that the indication information is a cqi-Table, the determination unit 402 is specifically configured to: determine the first MCS table corresponding to the value of the cqi-Table on the basis of the value of the cqi-Table, wherein the different values of the cqi-Table are used to indicate different MCS tables, and one value corresponds to one MCS table.

Optionally, the determination unit 402 is specifically configured to: determine the type of the first MCS table on the basis of the indication information; and determine the first MCS table from the first type of MCS tables on the basis of an mcs-Table carried by the indication information, under the condition that the first MCS table is determined to be the first type of MCS tables, wherein the value of the mcs-Table is in one-to-one correspondence with each MCS table in the first type of MCS tables; or determine the first MCS table from the second type of MCS tables on the basis of the mcs-Table carried by the indication information, under the condition that the first MCS table is determined to be the second type of MCS tables, wherein the value of the mcs-Table is in one-to-one correspondence with each MCS table in the second type of MCS tables.

Optionally, the determination unit 402 is specifically configured to: determine whether the indication information carries bler-Target or not; and determine the first MCS table to be the second type of MCS tables, when it is determined that the indication information does not carry the bler-Target; and otherwise, determine the first MCS table to be the second type of MCS tables.

Optionally, the determination unit 402 is specifically configured to: determine the first MCS table to be the second type of MCS tables, when the bler-Target carried by the indication information is determined to be a first value; or determine the type of the first MCS table on the basis of the value of the CQI-Table carried by the indication information, when the bler-Target carried by the indication information is determined to be a second value.

Optionally, the determination unit 402 is specifically configured to: determine the first MCS table from the second type of MCS tables on the basis of the value of a new-mcs-Table, under the condition that it is determined that the indication information carries the newly defined new-mcs-Table used to indicate the second type of MCS tables, wherein the value of the new-mcs-Table is in one-to-one correspondence with each MCS table in the second type of MCS tables; or determine the first MCS table from the first type of MCS tables on the basis of the value of the mcs-Table carried by the indication information, under the condition that it is determined that the indication information does not carry the new-mcs-Table, wherein the value of the mcs-Table is in one-to-one correspondence with each MCS table in the first type of MCS tables.

Optionally, the determination unit 402 is specifically configured to: determine the type of the first MCS table on the basis of the service-Table carried by the indication information, wherein the service-Table is the newly defined field used to indicate the type of the MCS table, and the service-Table includes at least one bit; and determine the first MCS table from the second type of MCS tables on the basis of the value of the new-mcs-Table carried by the indication information, under the condition that the first MCS table is determined to be the second type of MCS tables, wherein the value of the new-mcs-Table is in one-to-one correspondence with each MCS table in the second type of MCS tables; or determine the first MCS table from the first type of MCS tables on the basis of the value of the mcs-Table carried by the indication information, under the condition that the first MCS table is determined to be the first type of MCS tables, wherein the value of the mcs-Table is in one-to-one correspondence with each MCS table in the first type of MCS tables.

Optionally, the determination unit 402 is specifically configured to: determine the type of the first MCS table on the basis of the service-Table carried by the indication information, wherein the service-Table is the newly defined field used to indicate the type of the MCS table, and the service-Table includes at least one bit; and determine the first MCS table from the second type of MCS tables on the basis of the value of the mcs-Table carried by the indication information, under the condition that the first MCS table is determined to be the second type of MCS tables, wherein the value of the mcs-Table is in one-to-one correspondence with each MCS table in the second type of MCS tables; or determine the first MCS table from the first type of MCS tables on the basis of the value of the mcs-Table carried by the indication information, under the condition that the first MCS table is determined to be the first type of MCS tables, wherein the value of the mcs-Table is in one-to-one correspondence with each MCS table in the first type of MCS tables.

Optionally, the determination unit 402 is specifically configured to: determine the type of the first MCS table on the basis of the service-Table carried by the indication information, wherein the service-Table is the newly defined field used to indicate the type of the MCS table, and the service-Table includes at least one bit; and determine that the first MCS table is the MCS table included in the second type of MCS tables, the under the condition that the first MCS table is determined to be the second type of MCS tables, and the second type of MCS tables only includes one MCS table.

Optionally, under the condition that the indication information is the mcs-Table, the determination unit 402 is specifically configured to: determine the first MCS table corresponding to the value of the mcs-Table on the basis of the value of the mcs-Table, wherein the mcs-Table includes at least two bits, the different values of the mcs-Table are used to indicate the different MCS tables, and one value corresponds to one MCS table.

Optionally, the first type of MCS tables includes 64QAM and 256QAM; and the second type of MCS tables at lease includes the MCS table corresponding to the bler-Target of 10⁻⁵.

The terminal can be configured to execute the method executed by the terminal in the method provided by the embodiment shown in the Fig. 1, and therefore the functions and the like which can be achieved by functional modules of the terminal may refer to description of the embodiment shown in the Fig. 1 and are not repeated herein.

Referring to Fig. 5, based on the same inventive concept, an embodiment of the present disclosure provides a base station, including: a sending unit 501, configured to send RRC signaling carrying indication information to a terminal, and thus allowing the terminal to be able to determine a first MCS table on the basis of the indication information, wherein the indication information is used to indicate the first MCS table, and the first MCS table is one of a first type of MCS tables and a second type of MCS tables.

Optionally, the indication information is a cqi-Table, wherein the different values of the cqi-Table are used to indicate the different MCS tables, and one value corresponds to one MCS table.

Optionally, an mcs-Table is carried in the indication information; when the first MCS table is the first type of MCS tables, the value of the mcs-Table is in one-to-one correspondence with each MCS table in the first type of MCS tables; or when the first MCS table is the second type of MCS tables, the value of the mcs-Table is in one-to-one correspondence with each MCS table in the second type of MCS tables.

Optionally, the base station also includes a first determination unit 502, configured to: determine the type of the first MCS table; and determine that bler-Target does not need to be carried in the indication information, when the first MCS table is determined to be the first type of MCS tables; or determine that the bler-Target needs to be carried in the indication information, when the first MCS table is determined to be the second type of MCS tables.

Optionally, when the bler-Target carried by the indication information is a first value, the bler-Target is used to indicate that the first MCS table is the second type of MCS tables; or when the bler-Target carried by the indication information is a second value, the bler-Target is used to indicate that the first MCS table is the second type of MCS tables, wherein the first value and the second value are used to indicate the different MCS tables included in the second type of MCS tables, respectively; or when the bler-Target carried by the indication information is the second value, the bler-Target is used to indicate that the first MCS table is the first type of MCS tables.

Optionally, the base station also includes a second determination unit 503, configured to: determine the type of the first MCS table; and determine that a newly defined new-mcs-Table used to indicate the second type of MCS tables needing to be carried in the indication information, when the first MCS table is determined to be the second type of MCS tables, wherein the value of the new-mcs-Table is in one-to-one correspondence with each MCS table in the second type of MCS tables; or determine that the new-mcs-Table does not need to be carried in the indication information, when the first MCS table is determined to be the first type of MCS tables.

Optionally, the indication information includes a service-Table, wherein the service-Table is the newly defined field used to indicate the type of the MCS table, and the service-Table includes at least one bit; and under the condition that the type indicated by the service-Table is the second type of MCS tables, the indication information carries the new-mcs-Table, and the value of the new-mcs-Table is in one-to-one correspondence with each MCS table in the second type of MCS tables; or under the condition that the type indicated by the service-Table is the first type of MCS tables, the indication information does not carry the new-mcs-Table, and the value of the mcs-Table carried by the indication information is in one-to-one correspondence with each MCS table in the first type of MCS tables.

Optionally, the indication information includes the service-Table, the service-Table is the newly defined field used to indicate the type of the MCS table, and the service-Table includes at least one bit; and under the condition that the type indicated by the service-Table is the second type of MCS tables, the value of the mcs-Table carried by the indication information is in one-to-one correspondence with each MCS table in the second type of MCS tables; or under the condition that the type indicated by the service-Table is the first type of MCS tables, the value of the mcs-Table is in one-to-one correspondence with each MCS table in the first type of MCS tables.

Optionally, the indication information includes the service-Table, wherein the service-Table is the newly defined field used to indicate the type of the MCS table, and the service-Table includes at least one bit; and under the condition that the type indicated by the service-Table is the second type of MCS tables, and the second type of MCS tables only includes one MCS table, the first MCS table is the MCS table included in the second type of MCS tables.

Optionally, the indication information is the mcs-Table, wherein the mcs-Table includes at least two bits, the different values of the mcs-Table are used to indicate the different MCS tables, and one value corresponds to one MCS table.

Optionally, the first type of MCS tables includes 64QAM and 256QAM; and the second type of MCS tables at lease includes the MCS table corresponding to the bler-Target of 10⁻⁵.

The base station can be configured to execute part of the method executed by the base station in the method provided by the embodiment shown in the Fig. 1, and therefore the functions and the like which can be achieved by functional modules of the base station can refer to description of the embodiment shown in the Fig. 1 and are not repeated herein. The first determination unit 502 and the second determination unit 503 are shown together in Fig. 5, and it needs to be noted that both units are not necessarily functional modules and are thus shown in dashed lines in Fig. 5.

Based on the same inventive concept, an embodiment of the present disclosure provides a readable storage medium in which a computer command is stored, and when the computer command is run on a computer, the computer executes the method as shown in Fig. 1. **The readable storage medium provided is not according to the invention and is present for illustration purposes only.**

In a specific implementation process, the computer readable storage medium includes various storage mediums capable of storing program codes, such as a universal serial bus flash drive (USB), a mobile hard disk, a read-only memory (ROM), a random access memory (RAM), a magnetic disk or an optical disk.

In the embodiments of the present disclosure, it should be understood that the disclosed equipment and methods can be implemented in other ways. For example, the equipment embodiments described above are merely illustrative, e.g., division of units is merely division of logical functions, and there may be other division ways in actual implementation, e.g., the plurality of units or components can be combined or integrated into another system, or some features can be omitted, or not performed. As another point, shown or discussed coupling or direct coupling or communication connection to each other may be achieved through some interfaces, indirect coupling or communication connection between equipment or the units may be in electrical or other forms.

Functional units in the embodiments of the present disclosure may be integrated in a processing unit, or each unit may also be an independent physical module.

When being implemented in the form of a software functional unit and sold or used as an independent product, the integrated unit can be stored in the computer readable storage medium. Based on such understanding, all or part of technical solutions of the embodiments of the present disclosure can be embodied in the form of a software product that is stored in a storage medium and includes a plurality of commands for enabling computer equipment, such as a personal computer, a server, or network equipment, or a processor to carry out all or part of the steps of the methods described in the various embodiments of the present disclosure. The storage medium mentioned above includes various mediums capable of storing program codes, such as a universal serial bus flash drive, a mobile hard disk, a read only memory (ROM), a random access memory (RAM), a magnetic disk or an optical disk.

The above-mentioned embodiments are only used to illustrate the technical solutions of the present disclosure in detail, but the description of the above-mentioned embodiments is merely intended to aid in understanding the methods of the embodiments of the present disclosure and should not be understood as a limitation on the embodiments of the present disclosure.

## Claims

1. A method for determining a modulation and coding scheme, MCS, table, comprising
receiving, by a terminal, radio resource control, RRC, signaling carrying indication information and sent by a base station,
wherein the indication information indicates a first MCS table, and the first MCS table is from a set of MCS tables comprising both a first type of MCS tables and a second type of MCS tables, the first type of MCS tables is MCS tables corresponding to enhanced Mobile Broadband, eMBB, service, and the second type of MCS tables is MCS tables corresponding to ultra-reliable low latency communications, URLLC, service; and
the method further comprises: determining (S102), by the terminal, the first MCS table based on the indication information; wherein, the determining (S102), by the terminal, the first MCS table based on the indication information by one of the following schemes:
scheme 1: when the indication information is a channel quality indicator table, cqi-Table field in the RRC signaling, determining, by the terminal, the first MCS table corresponding to a value of the cqi-Table field in the RRC signaling based on the value of the cqi-Table field in the RRC signaling, wherein different values of the cqi-Table field in the RRC signaling indicate different MCS tables, and one value corresponds to one MCS table;
scheme 2: determining, by the terminal, a type of the first MCS table based on the indication information; when the first MCS table is determined to be the first type of MCS tables, determining, by the terminal, the first MCS table from the first type of MCS tables based on an mcs-Table field in the RRC signaling carried by the indication information, wherein a value of the mcs-Table field in the RRC signaling is in one-to-one correspondence with each MCS table in the first type of MCS tables; or when the first MCS table is determined to be the second type of MCS tables, determining, by the terminal, the first MCS table from the second type of MCS tables based on the mcs-Table field in the RRC signaling carried by the indication information, wherein a value of the mcs-Table field in the RRC signaling is in one-to-one correspondence with each MCS table in the second type of MCS tables;
scheme 3: when the terminal determines that the indication information carries a new-mcs-Table field in the RRC signaling configured to indicate the second type of MCS tables, determining, by the terminal, the first MCS table from the second type of MCS tables based on a value of the new-mcs-Table field in the RRC signaling, wherein the value of the new-mcs-Table field in the RRC signaling is in one-to-one correspondence with each MCS table in the second type of MCS tables; or when the terminal determines that the indication information does not carry the new-mcs-Table field in the RRC signaling, determining, by the terminal, the first MCS table from the first type of MCS tables based on the value of an mcs-Table field in the RRC signaling carried by the indication information, wherein the value of the mcs-Table field in the RRC signaling is in one-to-one correspondence with each MCS table in the first type of MCS tables;
scheme 4: determining, by the terminal, a type of the first MCS table based on a service-Table carried by the indication information, wherein the service-Table is a field configured to indicate a type of an MCS table, and the service-Table comprises at least one bit; and when the terminal determines that the first MCS table is the second type of MCS tables, determining, by the terminal, the first MCS table from the second type of MCS tables based on a value of a new-mcs-Table field in the RRC signaling carried by the indication information, wherein the value of the new-mcs-Table field in the RRC signaling is in one-to-one correspondence with each MCS table in the second type of MCS tables; or when the terminal determines that the first MCS table is the first type of MCS tables, determining, by the terminal, the first MCS table from the first type of MCS tables based on a value of an mcs-Table field in the RRC signaling carried by the indication information, wherein the value of the mcs-Table field in the RRC signaling is in one-to-one correspondence with each MCS table in the first type of MCS tables; wherein the new-mcs-Table field in the RRC signaling is specially used to indicate the second type of MCS tables;
scheme 5: determining, by the terminal, a type of the first MCS table based on a service-Table carried by the indication information, wherein the service-Table is a field configured to indicate a type of an MCS table, and the service-Table comprises at least one bit; and when the terminal determines that the first MCS table is the second type of MCS tables, determining, by the terminal, the first MCS table from the second type of MCS tables based on a value of an mcs-Table field in the RRC signaling carried by the indication information, wherein the value of the mcs-Table field in the RRC signaling is in one-to-one correspondence with each MCS table in the second type of MCS tables; or when the terminal determines that the first MCS table is the first type of MCS tables, determining, by the terminal, the first MCS table from the first type of MCS tables based on a value of the mcs-Table field in the RRC signaling carried by the indication information, wherein the value of the mcs-Table field in the RRC signaling is in one-to-one correspondence with each MCS table in the first type of MCS tables;
scheme 6: determining, by the terminal, a type of the first MCS table based on a service-Table carried by the indication information, wherein the service-Table is a field configured to indicate a type of an MCS table, and the service-Table comprises at least one bit; and when the terminal determines that the first MCS table is the second type of MCS tables and the second type of MCS tables only comprises one MCS table, determining, by the terminal, that the first MCS table is the only MCS table comprised in the second type of MCS tables;
scheme 7: determining, by the terminal, the first MCS table corresponding to a value of an mcs-Table field in the RRC signaling based on the value of the mcs-Table field in the RRC signaling, wherein the mcs-Table field in the RRC signaling comprises at least two bits, different values of the mcs-Table field in the RRC signaling are configured to indicate different MCS tables, and one value corresponds to one MCS table.

2. The method according to claim 1, wherein the scheme 2 is adopted, and the determining, by the terminal, the type of the first MCS table based on the indication information comprises:
determining, by the terminal, whether the indication information carries a target block error rate, bler-Target field in the RRC signaling; and
determining, by the terminal, the first MCS table to be the first type of MCS tables in response to that the indication information does not carry the bler-Target field in the RRC signaling; or determining, by the terminal, the first MCS table to be the second type of MCS tables in response to that the indication information carries the bler-Target field in the RRC signaling.

3. The method according to claim 1, wherein the scheme 2 is adopted, and the determining, by the terminal, the type of the first MCS table based on the indication information comprises:
when the terminal determines that the bler-Target field in the RRC signaling carried by the indication information is a first value, determining that the first MCS table is the second type of MCS tables; or
when the terminal determines that the bler-Target field in the RRC signaling carried by the indication information is a second value, determining the type of the first MCS table based on the value of the cqi-Table field in the RRC signaling carried by the indication information.

4. The method according to any one of claims 1-3, wherein the first type of MCS tables comprises 64QAM and 256QAM; and the second type of MCS tables comprises at least an MCS table corresponding to a bler-Target of 10⁻⁵.

5. A method for determining an MCS table, comprising:
sending (S101), by a base station, RRC signaling carrying indication information to a terminal, to enable the terminal to determine a first MCS table based on the indication information,
wherein the indication information indicates the first MCS table, and the first MCS table is from a set of MCS tables comprising both a first type of MCS tables and a second type of MCS tables, the first type of MCS tables is MCS tables corresponding to enhanced Mobile Broadband, eMBB, service, and the second type of MCS tables is MCS tables corresponding to ultra-reliable low latency communications, URLLC, service; wherein the indication information is defined by one of the following schemes:
scheme 1: the indication information is a cqi-Table field in the RRC signaling, wherein different values of the cqi-Table field in the RRC signaling indicate different MCS tables, and one value corresponds to one MCS table;
scheme 2: the indication information carries an mcs-Table field in the RRC signaling; when the first MCS table is the first type of MCS tables, a value of the mcs-Table field in the RRC signaling is in one-to-one correspondence with each MCS table in the first type of MCS tables; or when the first MCS table is the second type of MCS tables, a value of the mcs-Table field in the RRC signaling is in one-to-one correspondence with each MCS table in the second type of MCS tables;
scheme 3: the indication information carries a new-mcs-Table field in the RRC signaling configured to indicate the second type of MCS tables, and the value of the new-mcs-Table field in the RRC signaling is in one-to-one correspondence with each MCS table in the second type of MCS tables; or the indication information does not carry the new-mcs-Table field in the RRC signaling, and the value of an mcs-Table field in the RRC signaling is in one-to-one correspondence with each MCS table in the first type of MCS tables;
scheme 4: the indication information comprises a service-Table, wherein the service-Table is a field configured to indicate a type of an MCS table, and the service-Table comprises at least one bit; and when the type indicated by the service-Table is the second type, a new-mcs-Table field in the RRC signaling is carried in the indication information, and a value of the new-mcs-Table field in the RRC signaling is in one-to-one correspondence with each MCS table in the second type of MCS tables; or when the type indicated by the service-Table is the first type, the new-mcs-Table field in the RRC signaling is not carried in the indication information, and a value of an mcs-Table field in the RRC signaling carried by the indication information is in one-to-one correspondence with each MCS table in the first type of MCS tables; wherein the new-mcs-Table field in the RRC signaling is specially used to indicate the second type of MCS tables;
scheme 5: the indication information comprises a service-Table, the service-Table is a field configured to indicate a type of an MCS table, and the service-Table comprises at least one bit; and when the type indicated by the service-Table is the second type, the value of an mcs-Table field in the RRC signaling carried by the indication information is in one-to-one correspondence with each MCS table in the second type of MCS tables; or when the type indicated by the service-Table is the first type, the value of the mcs-Table field in the RRC signaling is in one-to-one correspondence with each MCS table in the first type of MCS tables;
scheme 6: the indication information comprises a service-Table, the service-Table is a field configured to indicate a type of an MCS table, and the service-Table comprises at least one bit; and when the type indicated by the service-Table is the second type, and the second type of MCS tables only comprise one MCS table, the first MCS table is the only MCS table comprised in the second type of MCS tables;
scheme 7: the indication information is an mcs-Table field in the RRC signaling, the mcs-Table field in the RRC signaling comprises at least two bits, different values of the mcs-Table field in the RRC signaling are configured to indicate different MCS tables, and one value corresponds to one MCS table.

6. The method according to claim 5, wherein the scheme 2 is adopted, before the base station sends the RRC signaling carrying the indication information to the terminal, the method further comprises:
determining, by the base station, a type of the first MCS table; and
when the base station determines that the first MCS table is the first type of MCS tables, determining, by the base station, that a bler-Target field in the RRC signaling does not need to be carried in the indication information; or
when the base station determines that the first MCS table is the second type of MCS tables, determining, by the base station, that the bler-Target field in the RRC signaling needs to be carried in the indication information

7. The method according to claim 5, wherein the scheme 2 is adopted; wherein
when a bler-Target field in the RRC signaling carried by the indication information is a first value, the bler-Target field in the RRC signaling is configured to indicate that the first MCS table is the second type of MCS tables; or
when the bler-Target field in the RRC signaling carried by the indication information is a second value, the bler-Target field in the RRC signaling is configured to indicate that the first MCS table is the second type of MCS tables, wherein the first value and the second value are configured to indicate different MCS tables comprised in the second type of MCS tables, respectively; or
when the bler-Target field in the RRC signaling carried by the indication information is the second value, the bler-Target field in the RRC signaling is configured to indicate that the first MCS table is the first type of MCS tables

8. The method according to claim 5, wherein the scheme 3 is adopted, before the base station sends the RRC signaling carrying the indication information to the terminal, the method further comprises:
determining, by the base station, a type of the first MCS table; and
when the base station determines that the first MCS table is the second type of MCS tables, determining, by the base station, that the new-mcs-Table field in the RRC signaling configured to indicate the second type of MCS tables needs to be carried in the indication information, wherein a value of the new-mcs-Table field in the RRC signaling is in one-to-one correspondence with each MCS table in the second type of MCS tables; or
when the base station determines that the first MCS table is the first type of MCS tables, determining, by the base station, that the new-mcs-Table field in the RRC signaling does not need to be carried in the indication information.

9. The method according to any one of claims 5-8, wherein the first type of MCS tables comprises 64QAM and 256QAM; and the second type of MCS tables comprises at least an MCS table corresponding to a bler-Target field in the RRC signaling of 10⁻⁵.

10. A terminal, comprising:
a memory (201), configured to store instructions;
a processor (202), configured to read the instructions in the memory (201) to execute following processes:
receiving RRC signaling carrying indication information and sent by a base station through a transceiver,
wherein the indication information indicates a first MCS table, and the first MCS table is from a set of MCS tables comprising both a first type of MCS tables and a second type of MCS tables, the first type of MCS tables is MCS tables corresponding to enhanced Mobile Broadband, eMBB, service, and the second type of MCS tables is MCS tables corresponding to ultra-reliable low latency communications, URLLC, service; and
the processor (202) is further configured to read the instructions in the memory (201) to execute:
determining the first MCS table based on the indication information; and
a transceiver (203), configured to receive and send data under the control of the processor (202); wherein, the processor (202) is further configured to read the instructions in the memory (201) to:
when the indication information is a cqi-Table field in the RRC signaling, determine the first MCS table corresponding to a value of the cqi-Table field in the RRC signaling based on the value of the cqi-Table field in the RRC signaling, wherein different values of the cqi-Table field in the RRC signaling indicate different MCS tables, and one value corresponds to one MCS table; or
determine a type of the first MCS table based on the indication information; and when the first MCS table is determined to be the first type of MCS tables, determine the first MCS table from the first type of MCS tables based on an mcs-Table field in the RRC signaling carried by the indication information, wherein a value of the mcs-Table field in the RRC signaling is in one-to-one correspondence with each MCS table in the first type of MCS tables; or when the first MCS table is determined to be the second type of MCS tables, determine the first MCS table from the second type of MCS tables based on the mcs-Table field in the RRC signaling carried by the indication information, wherein a value of the mcs-Table field in the RRC signaling is in one-to-one correspondence with each MCS table in the second type of MCS tables; or
when it is determined that the indication information carries a new-mcs-Table field in the RRC signaling configured to indicate the second type of MCS tables, determine the first MCS table from the second type of MCS tables based on the value of the new-mcs-Table field in the RRC signaling, wherein the value of the new-mcs-Table field in the RRC signaling is in one-to-one correspondence with each MCS table in the second type of MCS tables; or when it is determined that the indication information does not carry the new-mcs-Table field in the RRC signaling, determine the first MCS table from the first type of MCS tables based on the value of an the mcs-Table field in the RRC signaling carried by the indication information, wherein the value of the mcs-Table field in the RRC signaling is in one-to-one correspondence with each MCS table in the first type of MCS tables; or
determine a type of the first MCS table based on a service-Table carried by the indication information, wherein the service-Table is a field configured to indicate a type of an MCS table, and the service-Table comprises at least one bit; and when the first MCS table is determined to be the second type of MCS tables, determine the first MCS table from the second type of MCS tables based on a value of a new-mcs-Table field in the RRC signaling carried by the indication information, wherein the value of the new-mcs-Table field in the RRC signaling is in one-to-one correspondence with each MCS table in the second type of MCS tables; or when the first MCS table is determined to be the first type of MCS tables, determine the first MCS table from the first type of MCS tables based on a value of an mcs-Table field in the RRC signaling carried by the indication information, wherein the value of the mcs-Table field in the RRC signaling is in one-to-one correspondence with each MCS table in the first type of MCS tables; wherein the new-mcs-Table field in the RRC signaling is specially used to indicate the second type of MCS tables; or
determine a type of the first MCS table based on a service-Table carried by the indication information, wherein the service-Table is a field configured to indicate a type of an MCS table, and the service-Table comprises at least one bit; and when the first MCS table is determined to be the second type of MCS tables, determine the first MCS table from the second type of MCS tables based on a value of an mcs-Table field in the RRC signaling carried by the indication information, wherein the value of the mcs-Table field in the RRC signaling is in one-to-one correspondence with each MCS table in the second type of MCS tables; or when the first MCS table is determined to be the first type of MCS tables, determine the first MCS table from the first type of MCS tables based on a value of the mcs-Table field in the RRC signaling carried by the indication information, wherein the value of the mcs-Table field in the RRC signaling is in one-to-one correspondence with each MCS table in the first type of MCS tables; or
determine a type of the first MCS table based on a service-Table carried by the indication information, wherein the service-Table is a field configured to indicate a type of an MCS table, and the service-Table comprises at least one bit; and when the first MCS table is the second type of MCS tables and the second type of MCS tables only comprise one MCS table, determine that the first MCS table is the only MCS table comprised in the second type of MCS tables; or
when the indication information is an mcs-Table field in the RRC signaling, determine the first MCS table corresponding to a value of the mcs-Table field in the RRC signaling based on the value of the mcs-Table field in the RRC signaling, wherein the mcs-Table field in the RRC signaling comprises at least two bits, different values of the mcs-Table field in the RRC signaling are configured to indicate different MCS tables, and one value corresponds to one MCS table.

11. The terminal according to claim 10, wherein the first type of MCS tables comprises 64QAM and 256QAM; and the second type of MCS tables comprises at least an MCS table corresponding to a bler-Target field in the RRC signaling of 10⁻⁵.

12. A base station, comprising:
a memory (301), configured to store instructions; a processor (302), configured to read the instructions in the memory (301) to execute the method according to any one of claims 5-9; and a transceiver (303), configured to receive and send data under the control of the processor (302).

## Patentansprüche

1. Verfahren zum Bestimmen einer MCS- (Modulation and Coding Scheme - Modulations- und Codierschema-) Tabelle, umfassend:
Empfangen, durch ein Endgerät, einer RRC-, Radio Ressource Control-, Signalisierung, die Angabeinformationen führt und durch eine Basisstation gesendet wird,
wobei die Angabeinformationen eine erste MCS-Tabelle angeben und die erste MCS-Tabelle aus einer Menge von MCS-Tabellen ist, umfassend sowohl einen ersten Typ von MCS-Tabellen als auch einen zweiten Typ von MCS-Tabellen, wobei der erste Typ von MCS-Tabellen MCS-Tabellen entsprechend einem eMBB-, enhanced Mobile Broadband-, Dienst sind, und der zweite Typ von MCS-Tabellen MCS-Tabellen entsprechend einem URLLC-, Ultra-Reliable Low Latency Communications-, Dienst sind; und
das Verfahren weiter umfasst: Bestimmen (S102), durch das Endgerät, der ersten MCS-Tabelle auf Basis der Angabeinformationen; wobei das Bestimmen (S102), durch das Endgerät, der ersten MCS-Tabelle auf Basis der Angabeinformationen durch eines der folgenden Schemata:
Schema 1: wenn die Angabeinformationen ein Kanalgüteindikatortabellen-, cqi-Table-, Feld in der RRC-Signalisierung sind, Bestimmen, durch das Endgerät, der ersten MCS-Tabelle entsprechend einem Wert des cqi-Table-Felds in der RRC-Signalisierung auf Basis des Werts des cqi-Table-Felds in der RRC-Signalisierung-, wobei verschiedene Werte des cqi-Table-Felds in der RRC-Signalisierung unterschiedliche MCS-Tabellen angeben und ein Wert einer MCS-Tabelle entspricht;
Schema 2: Bestimmen, durch das Endgerät, eines Typs der ersten MCS-Tabelle auf Basis der Angabeinformationen; wenn die erste MCS-Tabelle als der erste Typ von MCS-Tabellen bestimmt wird, Bestimmen, durch das Endgerät, der ersten MCS-Tabelle von dem ersten Typ von MCS-Tabellen auf Basis eines MCS-Table-Felds in der RRC-Signalisierung geführt durch die Angabeinformationen, wobei ein Wert des mcs-Table-Felds in der RRC-Signalisierung sich in einer Eins-zu-Eins-Übereinstimmung mit jeder MCS-Tabelle in dem ersten Typ von MCS-Tabellen befindet; oder wenn die erste MCS-Tabelle als der zweite Typ von MCS-Tabellen bestimmt wird, Bestimmen, durch das Endgerät, der ersten MCS-Tabelle aus dem zweiten Typ von MCS-Tabellen auf Basis des mcs-Table-Felds in der RRC-Signalisierung, durch die Angabeinformationen geführt, wobei ein Wert des mcs-Table-Felds in der RRC-Signalisierung sich in einer Eins-zu-Eins-Übereinstimmung mit jeder MCS-Tabelle in dem zweiten Typ von MCS-Tabellen befindet;
Schema 3: wenn das Endgerät bestimmt, dass die Angabeinformationen ein new-mcs-Table-Feld in der RRC-Signalisierung führen, ausgelegt zum Angeben des zweiten Typs von MCS-Tabellen, Bestimmen, durch das Endgerät, der ersten MCS-Tabelle aus dem zweiten Typ von MCS-Tabellen auf Basis eines Werts der new-mcs-Table-Felds in der RRC-Signalisierung, wobei der Wert des new-mcs-Table-Felds in der RRC-Signalisierung sich in einer Eins-zu-Eins-Übereinstimmung mit jeder MCS-Tabelle in dem zweiten Typ von MCS-Tabellen befindet; oder wenn das Endgerät bestimmt, dass die Angabeinformationen nicht das new-mcs-Table-Feld in der RRC-Signalisierung führen, Bestimmen, durch das Endgerät, der ersten MCS-Tabelle aus dem ersten Typ von MCS-Tabellen auf Basis des Werts eines mcs-Table-Felds in der RRC-Signalisierung, geführt durch die Angabeinformationen, wobei der Wert des mcs-Table-Felds in der RRC-Signalisierung sich in einer Eins-zu-Eins-Übereinstimmung mit jeder MCS-Tabelle in dem ersten Typ von MCS-Tabellen befindet;
Schema 4: Bestimmen, durch das Endgerät, eines Typs der ersten MCS-Tabelle auf Basis einer Dienst-Tabelle, geführt durch die Angabeinformationen, wobei die Dienst-Tabelle ein Feld ist, das ausgelegt ist zum Angeben eines Typs einer MCS-Tabelle, und die Dienst-Tabelle mindestens ein Bit umfasst; und wenn Endgerät bestimmt, dass die erste MCS-Tabelle der zweite Typ von MCS-Tabellen ist, Bestimmen, durch das Endgerät, der ersten MCS-Tabelle aus dem zweiten Typ von MCS-Tabellen auf Basis eines Werts eines new-mcs-Table-Felds in der RRC-Signalisierung, geführt durch die Angabeinformationen, wobei der Wert des new-mcs-Table-Felds in der RRC-Signalisierung sich in einer Eins-zu-Eins-Übereinstimmung mit jeder MCS-Tabelle in dem zweiten Typ von MCS-Tabellen befindet; oder wenn das Endgerät bestimmt, dass die erste MCS-Tabelle der erste Typ von MCS-Tabellen ist, Bestimmen, durch das Endgerät, der ersten MCS-Tabelle aus dem ersten Typ von MCS-Tabellen auf Basis eines Werts eines mcs-Table-Felds in der RRC-Signalisierung, geführt durch die Angabeinformationen, wobei der Wert des mcs-Table-Felds in der RRC-Signalisierung sich in einer Eins-zu-Eins-Übereinstimmung mit jeder MCS-Tabelle in dem ersten Typ von MCS-Tabellen befindet; wobei das new-mcs-Table-Feld in der RRC-Signalisierung besonders verwendet wird zum Angeben des zweiten Typs von MCS-Tabellen;
Schema 5: Bestimmen, durch das Endgerät, eines Typs der ersten MCS-Tabelle auf Basis einer durch die Angabeinformationen geführten Dienst-Tabelle, wobei die Dienst-Tabelle ein Feld ist, das ausgelegt ist zum Angeben eines Typs von MCS-Tabelle, und die Dienst-Tabelle mindestens ein Bit umfasst; und wenn das Endgerät bestimmt, dass die erste MCS-Tabelle der zweite Typ von MCS-Tabellen ist, Bestimmen, durch das Endgerät, der ersten MCS-Tabelle von dem zweiten Typ von MCS-Tabellen auf Basis eines Werts eines mcs-Table-Felds in der durch die Angabeinformationen geführten RRC-Signalisierung, wobei der Wert des mcs-Table-Felds in der RRC-Signalisierung sich in einer Eins-zu-Eins-Übereinstimmung mit jeder MCS-Tabelle in dem zweiten Typ von MCS-Tabellen befindet; oder wenn das Endgerät bestimmt, dass die erste MCS-Tabelle der erste Typ von MCS-Tabellen ist, Bestimmen, durch das Endgerät, der ersten MCS-Tabelle aus dem ersten Typ von MCS-Tabellen auf Basis eines Werts des mcs-Table-Felds in der durch die Angabeinformationen geführten RRC-Signalisierung, wobei der Wert des mcs-Table-Felds in der RRC-Signalisierung sich in einer Eins-zu-Eins-Übereinstimmung mit jeder MCS-Tabelle in dem ersten Typ von MCS-Tabellen befindet;
Schema 6: Bestimmen, durch das Endgerät, eines Typs der ersten MCS-Tabelle auf Basis einer durch die Angabeinformationen geführten Dienst-Tabelle; wobei die Dienst-Tabelle ein Feld ist, das ausgelegt ist zum Angeben eines Typs einer MCS-Tabelle, und die Dienst-Tabelle mindestens ein Bit umfasst; und wenn das Endgerät bestimmt, dass die erste MCS-Tabelle der zweite Typ von MCS-Tabellen ist und der zweite Typ von MCS-Tabellen nur eine MCS-Tabelle umfasst, Bestimmen, durch das Endgerät, dass die erste MCS-Tabelle die einzige in dem zweiten Typ von MCS-Tabellen umfasste MCS-Tabelle ist;
Schema 7: Bestimmen, durch das Endgerät, der ersten MCS-Tabelle entsprechend einem Wert eines mcs-Table-Felds in der RRC-Signalisierung auf Basis des Werts des mcs-Table-Felds in der RRC-Signalisierung, wobei das mcs-Table-Feld in der RRC-Signalisierung mindestens zwei Bits umfasst, unterschiedliche Werte des mcs-Table-Felds in der RRC-Signalisierung ausgelegt sind zum Angeben unterschiedlicher MCS-Tabellen, und ein Wert einer MCS-Tabelle entspricht.

2. Verfahren nach Anspruch 1, wobei das Schema 2 verwendet wird und das Bestimmen, durch das Endgerät, des Typs der ersten MCS-Tabelle auf Basis der Angabeinformationen umfasst:
Bestimmen, durch das Endgerät, ob die Angabeinformationen eine Zielblockfehlerrate, ein bler-Target-Feld in der RRC-Signalisierung, führen; und
Bestimmen, durch das Endgerät, der ersten MCS-Tabelle als der erste Typ von MCS-Tabellen als Reaktion darauf, dass die Angabeinformationen nicht das bler-Target-Feld in der RRC-Signalisierung führen; oder Bestimmen, durch das Endgerät, der ersten MCS-Tabelle als der zweite Typ von MCS-Tabellen als Reaktion darauf, dass die Angabeinformationen das bler-Target-Feld in der RRC-Signalisierung führen.

3. Verfahren nach Anspruch 1, wobei das Schema 2 verwendet wird und das Bestimmen, durch das Endgerät, des Typs der ersten MCS-Tabelle auf Basis der Angabeinformationen umfasst:
wenn das Endgerät bestimmt, dass das bler-Target-Feld in der durch die Angabeinformationen geführten RRC-Signalisierung ein erster Wert ist, Bestimmen, dass die erste MCS-Tabelle der zweite Typ von MCS-Tabellen ist; oder
wenn das Endgerät bestimmt, dass das bler-Target-Feld in der durch die Angabeinformationen geführten RRC-Signalisierung ein zweiter Wert ist, Bestimmen des Typs der ersten MCS-Tabelle auf Basis des Werts des cqi-Table-Felds in der durch die Angabeinformationen geführten RRC-Signalisierung.

4. Verfahren nach einem der Ansprüche 1-3, wobei der erste Typ von MCS-Tabellen 64 QAM- und 256 QAM umfasst; und der zweite Typ von MCS-Tabellen mindestens eine MCS-Tabelle entsprechend einem bler-Target von 10⁻⁵ umfasst.

5. Verfahren zum Bestimmen einer MCS-Tabelle, umfassend:
Senden (S101), durch eine Basisstation, einer Angabeinformationen führenden RRC-Signalisierung zu einem Endgerät, damit das Endgerät eine erste MCS-Tabelle auf Basis der Angabeinformationen bestimmen kann,
wobei die Angabeinformationen die erste MCS-Tabelle angeben und die erste MCS-Tabelle aus einer Menge von MCS-Tabellen ist, umfassend sowohl einen ersten Typ von MCS-Tabellen als auch einen zweiten Typ von MCS-Tabellen, der erste Typ von MCS-Tabellen MCS-Tabellen entsprechend einem eMBB-, Enhanced Mobile Broadband- Dienst ist und der zweite Typ von MCS-Tabellen MCS-Tabellen entsprechend einem URLLC-, Ultra-Reliable Low Latency Communications-, Dienst ist; wobei die Angabeinformationen durch eines der folgenden Schemata definiert werden:
Schema 1: die Angabeinformationen sind ein cqi-Table-Feld in der RRC-Signalisierung, wobei verschiedene Werte des cqi-Table-Felds in der RRC-Signalisierung unterschiedliche MCS-Tabellen angeben und ein Wert einer MCS-Tabelle entspricht;
Schema 2: die Angabeinformationen führen ein mcs-Table-Feld in der RRC-Signalisierung; wenn die erste MCS-Tabelle der erste Typ von MCS-Tabellen ist, sich ein Wert des mcs-Table-Felds in der RRC-Signalisierung in einer Eins-zu-Eins-Übereinstimmung mit jeder MCS-Tabelle in dem ersten Typ von MCS-Tabellen befindet; oder wenn die erste MCS-Tabelle der zweite Typ von MCS-Tabellen ist, sich ein Wert des mcs-Table-Felds in der RRC-Signalisierung in einer Eins-zu-Eins-Übereinstimmung mit jeder MCS-Tabelle in dem zweiten Typ von MCS-Tabellen befindet;
Schema 3: die Angabeinformationen führen ein new-mcs-Table-Feld in der RRC-Signalisierung, ausgelegt zum Angeben des zweiten Typs von MCS-Tabellen; und der Wert des new-mcs-Table-Felds in der RRC-Signalisierung befindet sich in einer Eins-zu-Eins-Übereinstimmung mit jeder MCS-Tabelle in dem zweiten Typ von MCS-Tabellen; oder die Angabeinformationen führen nicht das new-mcs-Table-Feld in der RRC-Signalisierung, und der Wert eines mcs-Table-Feld in der RRC-Signalisierung befindet sich in einer Eins-zu-Eins-Übereinstimmung mit jeder MCS-Tabelle in dem ersten Typ von MCS-Tabellen;
Schema 4: die Angabeinformationen umfassen eine Dienst-Tabelle, wobei die Dienst-Tabelle ein Feld ist, das ausgelegt ist zum Angeben eines Typs einer MCS-Tabelle, und die Dienst-Tabelle mindestens ein Bit umfasst;
und wenn der durch die Dienst-Tabelle angegebene Typ der zweite Typ ist, wird ein new-mcs-Table-Feld in der RRC-Signalisierung in den Angabeinformationen geführt, und ein Wert des new-mcs-Table-Felds in der RRC-Signalisierung befindet sich in einer Eins-zu-Eins-Übereinstimmung mit jeder MCS-Tabelle in dem zweiten Typ von MCS-Tabellen; oder wenn der durch die Dienst-Tabelle angegebene Typ der erste Typ ist, wird das new-mcs-Table-Feld in der RRC-Signalisierung nicht in den Angabeinformationen geführt, und ein Wert eines mcs-Table-Felds in der durch die Angabeinformationen geführten RRC-Signalisierung befindet sich in einer Eins-zu-Eins-Übereinstimmung mit jeder MCS-Tabelle in dem ersten Typ von MCS-Tabellen; wobei das new-mcs-Table-Feld der RRC-Signalisierung insbesondere zum Angeben des zweiten Typs von MCS-Tabellen verwendet wird;
Schema 5: die Angabeinformationen umfassen eine Dienst-Tabelle, wobei die Dienst-Tabelle ein Feld ist, das ausgelegt ist zum Angeben eines Typs einer MCS-Tabelle, und die Dienst-Tabelle mindestens ein Bit umfasst; und wenn der durch die Dienst-Tabelle angegebene Typ der zweite Typ ist, der Wert eines mcs-Table-Felds in der durch die Angabeinformationen geführten RRC-Signalisierung eine Eins-zu-Eins-Übereinstimmung mit jeder MCS-Tabelle in dem zweiten Typ von MCS-Tabellen ist; oder wenn der durch die Dienst-Tabelle angegebene Typ der erste Typ ist, sich der Wert des mcs-Table-Felds in der RRC-Signalisierung in einer Eins-zu-Eins-Übereinstimmung mit jeder MCS-Tabelle in dem ersten Typ von MCS-Tabellen befindet;
Schema 6: die Angabeinformationen umfassen eine Dienst-Tabelle, wobei die Dienst-Tabelle ein Feld ist, das ausgelegt ist zum Angeben eines Typs einer MCS-Tabelle, und die Dienst-Tabelle mindestens ein Bit umfasst; und wenn der durch die Dienst-Tabelle angegebene Typ der zweite Typ ist und der zweite Typ von MCS-Tabellen nur eine MCS-Tabelle umfasst, die erste MCS-Tabelle die einzige MCS-Tabelle ist, die in dem zweiten Typ von MCS-Tabellen umfasst ist;
Schema 7: die Angabeinformationen sind ein mcs-Table-Feld in der RRC-Signalisierung, das mcs-Table-Feld in der RRC-Signalisierung umfasst mindestens zwei Bit, verschiedene Werte des mcs-Table-Felds in der RRC-Signalisierung sind ausgelegt zum Angeben verschiedener MCS-Tabellen, und ein Wert entspricht einer MCS-Tabelle.

6. Verfahren nach Anspruch 5, wobei das Schema 2 verwendet wird, bevor die Basisstation die die Angabeinformationen führende RRC-Signalisierung an das Endgerät schickt, wobei das Verfahren weiter umfasst:
Bestimmen, durch die Basisstation, eines Typs der ersten MCS-Tabelle; und
wenn die Basisstation bestimmt, dass die erste MCS-Tabelle der erste Typ von MCS-Tabellen ist, Bestimmen, durch die Basisstation, dass ein bler-Target-Feld in der RRC-Signalisierung nicht in den Angabeinformationen geführt werden muss; oder
wenn die Basisstation bestimmt, dass die erste MCS-Tabelle der zweite Typ von MCS-Tabellen ist, Bestimmen, durch die Basisstation, dass das bler-Target-Feld in der RRC-Signalisierung in den Angabeinformationen geführt werden muss.

7. Verfahren nach Anspruch 5, wobei das Schema 2 verwendet wird; wobei
wenn ein bler-Target-Feld in der durch die Angabeinformationen geführten RRC-Signalisierung ein erster Wert ist, das bler-Target-Feld in der RRC-Signalisierung ausgelegt ist zum Angeben, dass die erste MCS-Tabelle der zweite Typ von MCS-Tabellen ist; oder
wenn das bler-Target-Feld in der durch die Angabeinformationen geführten RRC-Signalisierung ein zweiter Wert ist, das bler-Target-Feld in der RRC-Signalisierung ausgelegt ist zum Angeben, dass die erste MCS-Tabelle der zweite Typ von MCS-Tabellen ist, wobei der erste Wert und der zweite Wert ausgelegt sind zum Anzeigen unterschiedlicher MCS-Tabellen, umfasst jeweils in dem zweiten Typ von MCS-Tabellen; oder
wenn das bler-Target-Feld in der durch die Angabeinformationen geführten RRC-Signalisierung der zweite Wert ist, das bler-Target-Feld in der RRC-Signalisierung ausgelegt ist anzugeben, dass die erste MCS-Tabelle der erste Typ von MCS-Tabellen ist.

8. Verfahren nach Anspruch 5, wobei das Schema 3 verwendet wird, bevor die Basisstation die die Angabeinformationen führende RRC-Signalisierung an das Endgerät sendet, wobei das Verfahren weiter umfasst:
Bestimmen, durch die Basisstation, eines Typs der ersten MCS-Tabelle; und
wenn die Basisstation bestimmt, dass die erste MCS-Tabelle der zweite Typ von MCS-Tabellen ist, Bestimmen, durch die Basisstation, dass das new-mcs-Table-Feld in der RRC-Signalisierung ausgelegt ist anzugeben, dass der zweite Typ von MCS-Tabellen in den Angabeinformationen geführt werden muss, wobei ein Wert des new-mcs-Table-Felds in der RRC-Signalisierung sich in einer Eins-zu-Eins-Übereinstimmung mit jeder MCS-Tabelle in dem zweiten Typ von MCS-Tabellen befindet; oder
wenn die Basisstation bestimmt, dass die erste MCS-Tabelle der erste Typ von MCS-Tabellen ist, Bestimmen, durch die Basisstation, dass das new-mcs-Table-Feld in der RRC-Signalisierung nicht in den Angabeinformationen geführt werden muss.

9. Verfahren nach einem der Ansprüche 5-8, wobei der erste Typ von MCS-Tabellen 64 QAM und 256 QAM umfasst; und der zweite Typ von MCS-Tabellen mindestens eine MCS-Tabelle entsprechend einem bler-Target-Feld in der RRC-Signalisierung von 10⁻⁵ umfasst.

10. Endgerät, umfassend:
einen Speicher (201), der ausgelegt ist zum Speichern von Anweisungen;
einen Prozessor (202), der ausgelegt ist zum Lesen der Anweisungen in dem Speicher (201), um folgende Prozesse auszuführen:
Empfangen einer Angabeinformationen führenden RRC-Signalisierung und Senden durch eine Basisstation durch einen Sendeempfänger,
wobei
die Angabeinformationen eine erste MCS-Tabelle angeben und die erste MCS-Tabelle von einer Menge von MCS-Tabellen ist, umfassend sowohl einen ersten Typ von MCS-Tabellen als auch einen zweiten Typ von MCS-Tabellen,
wobei der erste Typ von MCS-Tabellen MCS-Tabellen sind entsprechend einem eMBB-, Enhanced Mobile Broadband-, Dienst und der zweite Typ von MCS-Tabellen MCS-Tabellen sind entsprechend einem URLLC-, Ultra-Reliable Low Latency Communications-, Dienst; und
der Prozessor (202) weiter ausgelegt ist zum Lesen der Anweisungen in dem Speicher (201) zur Ausführung von:
Bestimmen der ersten MCS-Tabelle auf Basis der Angabeinformationen; und
einen Sendeempfänger (203), der ausgelegt ist zum Empfangen und Senden von Daten unter der Steuerung des Prozessors (202); wobei der Prozessor (202) weiter ausgelegt ist zum Lesen der Anweisungen in dem Speicher (201) zum:
wenn die Angabeinformationen ein cqi-Table-Feld in der RRC-Signalisierung sind, Bestimmen der ersten MCS-Tabelle entsprechend einem Wert des cqi-Table-Felds in der RRC-Signalisierung auf Basis des Werts des cqi-Table-Felds in der RRC-Signalisierung, wobei verschiedene Werte des cqi-Table-Felds in der RRC-Signalisierung verschiedene MCS-Tabellen angeben und ein Wert einer MCS-Tabelle entspricht; oder
Bestimmen eines Typs der ersten MCS-Tabelle auf Basis der Angabeinformationen; und wenn die erste MCS-Tabelle als der erste Typ von MCS-Tabellen bestimmt wird, Bestimmen der ersten MCS-Tabelle von dem ersten Typ von MCS-Tabellen auf Basis eines mcs-Table-Felds in der durch die Angabeinformationen geführten RRC-Signalisierung, wobei ein Wert des mcs-Table-Felds in der RRC-Signalisierung sich in einer Eins-zu-Eins-Übereinstimmung mit jeder MCS-Tabelle in dem ersten Typ von MCS-Tabellen befindet; oder wenn die erste MCS-Tabelle als der zweite Typ von MCS-Tabellen bestimmt wird, Bestimmen der ersten MCS-Tabelle aus dem zweiten Typ von MCS-Tabellen auf Basis des mcs-Table-Felds in der durch die Angabeinformationen geführten RRC-Signalisierung, wobei ein Wert des mcs-Table-Felds in der RRC-Signalisierung sich in einer Eins-zu-Eins-Übereinstimmung mit jeder MCS-Tabelle in dem zweiten Typ von MCS-Tabellen befindet; oder
wenn bestimmt wird, dass die Angabeinformationen ein new-mcs-Table-Feld in der RRC-Signalisierung führen, ausgelegt zum Angeben des zweiten Typs von MCS-Tabellen, Bestimmen der ersten MCS-Tabelle aus dem zweiten Typ von MCS-Tabellen auf Basis des Werts des new-mcs-Table-Felds in der RRC-Signalisierung, wobei der Wert des new-mcs-Table-Felds in der RRC-Signalisierung sich in einer Eins-zu-Eins-Übereinstimmung mit jeder MCS-Tabelle in dem zweiten Typ von MCS-Tabellen befindet; oder wenn bestimmt wird, dass die Angabeinformationen nicht das new-mcs-Table-Feld in der RRC-Signalisierung führen, Bestimmen der ersten MCS-Tabelle aus dem ersten Typ von MCS-Tabellen auf Basis des Werts eines mcs-Table-Felds in der durch die Angabeinformationen geführten RRC-Signalisierung, wobei
der Wert des mcs-Table-Felds in der RRC-Signalisierung sich in einer Eins-zu-Eins-Übereinstimmung mit jeder MCS-Tabelle in dem ersten Typ von MCS-Tabellen befindet; oder
Bestimmen eines Typs der ersten MCS-Tabelle auf Basis einer durch die Angabeinformationen geführten Dienst-Tabelle, wobei die Dienst-Tabelle ein Feld ist, das ausgelegt ist zum Angeben eines Typs einer MCS-Tabelle, und die Dienst-Tabelle mindestens ein Bit umfasst; und wenn die erste MCS-Tabelle als der zweite Typ von MCS-Tabellen bestimmt wird, Bestimmen der ersten MCS-Tabelle aus dem zweiten Typ von MCS-Tabellen auf Basis eines Werts eines new-mcs-Table-Felds in der durch die Angabeinformationen geführten RRC-Signalisierung, wobei der Wert des new-mcs-Table-Felds in der RRC-Signalisierung sich in einer Eins-zu-Eins-Übereinstimmung mit jeder MCS-Tabelle in dem zweiten Typ von MCS-Tabellen befindet; oder wenn die erste MCS-Tabelle als der erste Typ von MCS-Tabellen bestimmt wird, Bestimmen der ersten MCS-Tabelle aus dem ersten Typ von MCS-Tabellen auf Basis eines Werts eines mcs-Table-Felds in der durch die Angabeinformationen geführten RRC-Signalisierung, wobei der Wert des mcs-Table-Felds in der RRC-Signalisierung sich in einer Eins-zu-Eins-Übereinstimmung mit jeder MCS-Tabelle in dem ersten Typ von MCS-Tabellen befindet; wobei das new-mcs-Table-Feld in der RRC-Signalisierung insbesondere verwendet wird zum Angeben des zweiten Typs von MCS-Tabellen; oder
Bestimmen eines Typs der ersten MCS-Tabelle auf Basis einer durch die Angabeinformationen geführten Dienst-Tabelle, wobei die Dienst-Tabelle ein Feld ist, das ausgelegt ist zum Angeben eines Typs einer MCS-Tabelle, und die Dienst-Tabelle mindestens ein Bit umfasst; und wenn die erste MCS-Tabelle als der zweite Typ von MCS-Tabellen bestimmt wird, Bestimmen der ersten MCS-Tabelle aus dem zweiten Typ von MCS-Tabellen auf Basis eines Werts eines mcs-Table-Felds in der durch die Angabeinformationen geführten RRC-Signalisierung, wobei der Wert des mcs-Table-Felds in der RRC-Signalisierung sich in einer Eins-zu-Eins-Übereinstimmung mit jeder MCS-Tabelle in dem zweiten Typ von MCS-Tabellen befindet; oder wenn die erste MCS-Tabelle als der erste Typ von MCS-Tabellen bestimmt wird, Bestimmen der ersten MCS-Tabelle aus dem ersten Typ von MCS-Tabellen auf Basis eines Werts des mcs-Table-Felds in der durch die Angabeinformationen geführten RRC-Signalisierung, wobei der Wert des mcs-Table-Felds in der RRC-Signalisierung sich in einer Eins-zu-Eins-Übereinstimmung mit jeder MCS-Tabelle in dem ersten Typ von MCS-Tabellen befindet; oder
Bestimmen eines Typs der ersten MCS-Tabelle auf Basis einer durch die Angabeinformationen geführten Dienst-Tabelle, wobei die Dienst-Tabelle ein Feld ist, das ausgelegt ist zum Angeben eines Typs einer MCS-Tabelle, und die Dienst-Tabelle mindestens ein Bit umfasst; und wenn die erste MCS-Tabelle der zweite Typ von MCS-Tabellen ist und der zweite Typ von MCS-Tabellen nur eine MCS-Tabelle umfasst, Bestimmen, dass die erste MCS-Tabelle die einzige MCS-Tabelle ist, die in dem zweiten Typ von MCS-Tabellen umfasst ist; oder
wenn die Angabeinformationen ein mcs-Table-Feld in der RRC-Signalisierung sind, Bestimmen der ersten MCS-Tabelle entsprechend einem Wert des mcs-Table-Felds in der RRC-Signalisierung auf Basis des Werts des mcs-Table-Felds in der RRC-Signalisierung, wobei das mcs-Table-Feld in der RRC-Signalisierung mindestens zwei Bits umfasst, verschiedene Werte des mcs-Table-Felds in der RRC-Signalisierung ausgelegt sind zum Angeben verschiedener MCS-Tabellen und ein Wert einer MCS-Tabelle entspricht.

11. Endgerät nach Anspruch 10, wobei der erste Typ von MCS-Tabellen 64 QAM und 256 QAM umfasst; und der zweite Typ von MCS-Tabellen mindestens eine MCS-Tabelle entsprechend einem bler-Target-Feld in der RRC-Signalisierung von 10⁻⁵ umfasst.

12. Basisstation, umfassend:
einen Speicher (301), der ausgelegt ist zum Speichern von Anweisungen; einen Prozessor (302), der ausgelegt ist zum Lesen der Anweisungen in dem Speicher (301) zum Ausführen des Verfahrens nach einem der Ansprüche 5-9; und einen Sendeempfänger (303), der ausgelegt ist zum Empfangen und Senden von Daten unter der Steuerung des Prozessors (302).

## Revendications

1. Procédé de détermination d'un tableau de schéma de modulation et de codage, MCS, comprenant :
la réception, par un terminal, d'une signalisation de commande de ressources radio, RRC, transportant des informations d'indication et envoyée par une station de base,
les informations d'indication indiquant un premier tableau MCS, et le premier tableau MCS faisant partie d'un ensemble de tableaux MCS comprenant à la fois un premier type de tableaux MCS et un second type de tableaux MCS, le premier type de tableaux MCS étant des tableaux MCS correspondant au service à large bande mobile amélioré, eMBB, et le second type de tableaux MCS étant des tableaux MCS correspondant au service de communications ultra-fiables à faible latence, URLLC ; et
le procédé comprenant en outre : la détermination (S102), par le terminal, du premier tableau MCS sur la base des informations d'indication ; la détermination (S102), par le terminal, du tableau MCS sur la base des informations d'indication étant selon l'un des schémas suivants :
schéma 1 : lorsque les informations d'indication sont un champ de tableau d'indicateur de qualité de canal, cqi-Tableau dans la signalisation RRC, détermination, par le terminal, du premier tableau MCS correspondant à une valeur du champ cqi-Tableau dans la signalisation RRC sur la base de la valeur du champ cqi-Tableau dans la signalisation RRC, différentes valeurs du champ cqi-Tableau dans la signalisation RRC indiquant différents tableaux MCS, et une valeur correspondant à un tableau MCS ;
schéma 2 : détermination, par le terminal, d'un type du premier tableau MCS sur la base des informations d'indication ; lorsque le premier tableau MCS est déterminé comme étant le premier type de tableaux MCS, détermination, par le terminal, du premier tableau MCS à partir du premier type de tableaux MCS sur la base d'un champ mcs-Tableau dans la signalisation RRC transporté par les informations d'indication, une valeur du champ mcs-Tableau dans la signalisation RRC étant en correspondance biunivoque avec chaque tableau MCS dans le premier type de tableaux MCS ; ou lorsque le premier tableau MCS est déterminé comme étant le second type de tableaux MCS, détermination, par le terminal, du premier tableau MCS du second type de tableaux MCS sur la base du champ mcs-Tableau dans la signalisation RRC transporté par les informations d'indication, une valeur du champ mcs-Tableau dans la signalisation RRC étant en correspondance biunivoque avec chaque tableau MCS dans le second type de tableaux MCS ;
schéma 3 : lorsque le terminal détermine que les informations d'indication transportent un champ new-mcs-Tableau dans la signalisation RRC configuré pour indiquer le second type de tableaux MCS, détermination, par le terminal, du premier tableau MCS à partir du second type de tableaux MCS sur la base d'une valeur du champ new-mcs-Tableau dans la signalisation RRC, la valeur du champ new-mcs-Tableau dans la signalisation RRC étant en correspondance biunivoque avec chaque tableau MCS dans le second type de tableaux MCS ; ou, lorsque le terminal détermine que les informations d'indication ne transportent pas le champ new-mcs-Tableau dans la signalisation RRC, détermination, par le terminal, du premier tableau MCS à partir du premier type de tableau MCS sur la base de la valeur d'un champ mcs-Tableau dans la signalisation RRC transporté par les informations d'indication, la valeur du champ mcs-Tableau dans la signalisation RRC étant en correspondance biunivoque avec chaque tableau MCS dans le premier type de tableaux MCS ;
schéma 4 : détermination, par le terminal, d'un type du premier tableau MCS sur la base d'un tableau de service transporté par les informations d'indication, le tableau de service étant un champ configuré pour indiquer un type d'un tableau MCS, et le tableau de service comprenant au moins un bit ; et lorsque le terminal détermine que le premier tableau MCS est le second type de tableaux MCS, détermination, par le terminal, du premier tableau MCS à partir du second type de tableaux MCS sur la base d'une valeur d'un champ new-mcs-Tableau dans la signalisation RRC transporté par les informations d'indication, la valeur du champ new-mcs-Tableau dans la signalisation RRC étant en correspondance biunivoque avec chaque tableau MCS dans le second type de tableaux MCS ; ou lorsque le terminal détermine que le premier tableau MCS est le premier type de tableaux MCS, détermination, par le terminal, du premier tableau MCS à partir du premier type de tableaux MCS sur la base d'une valeur d'un champ mcs-Tableau dans la signalisation RRC transporté par les informations d'indication, la valeur du champ mcs-Tableau dans la signalisation RRC étant en correspondance biunivoque avec chaque tableau MCS dans le premier type de tableaux MCS : le champ new-mcs-Tableau dans la signalisation RRC étant spécialement utilisé pour indiquer le second type de tableaux MCS ;
schéma 5 : détermination, par le terminal, d'un type du premier tableau MCS sur la base d'un tableau de service transporté par les informations d'indication, le tableau de service étant un champ configuré pour indiquer un type d'un tableau MCS, et le tableau de service comprenant au moins un bit ; et lorsque le terminal détermine que le premier tableau MCS est le second type de tableaux MCS, détermination, par le terminal, du premier tableau MCS à partir du second type de tableaux MCS sur la base d'une valeur d'un champ mcs-Tableau dans la signalisation RRC transporté par les informations d'indication, la valeur du champ mcs-Tableau dans la signalisation RRC étant en correspondance biunivoque avec chaque tableau MCS dans le second type de tableaux MCS ; ou lorsque le terminal détermine que le premier tableau MCS est le premier type de tableaux MCS, détermination, par le terminal, du premier tableau MCS à partir du premier type de tableaux MCS sur la base d'une valeur du champ mcs-Tableau dans la signalisation RRC transporté par les informations d'indication, la valeur du champ mcs-Tableau dans la signalisation RRC étant en correspondance biunivoque avec chaque tableau MCS dans le premier type de tableaux MCS ;
schéma 6 : détermination, par le terminal, d'un type du premier tableau MCS sur la base d'un tableau de service transporté par les informations d'indication, le tableau de service étant un champ configuré pour indiquer un type d'un tableau MCS, et le tableau de service comprenant au moins un bit ; et lorsque le terminal détermine que le premier tableau MCS est le second type de tableaux MCS et que le second type de tableaux MCS ne comprend qu'un seul tableau MCS, détermination, par le terminal, que le premier tableau MCS est le seul tableau MCS compris dans le second type de tableaux MCS ;
schéma 7 : détermination, par le terminal, du premier tableau MCS correspondant à une valeur d'un champ mcs-Tableau dans la signalisation RRC sur la base de la valeur du champ mcs-Tableau dans la signalisation RRC, le champ mcs-Tableau dans la signalisation RRC comprenant au moins deux bits, différentes valeurs du champ mcs-Tableau dans la signalisation RRC étant configurées pour indiquer différents tableaux MCS, et une valeur correspondant à un tableau MCS.

2. Procédé selon la revendication 1, le schéma 2 étant adopté, et la détermination, par le terminal, du type du premier tableau MCS sur la base des informations d'indication comprenant :
la détermination, par le terminal, si les informations d'indication transportent un champ de taux d'erreur de bloc cible, bler-Target dans la signalisation RRC ; et
la détermination, par le terminal, que le premier tableau MCS correspond au premier type de tableaux MCS si les informations d'indication ne transportent pas le champ bler-Target dans la signalisation RRC ; ou la détermination, par le terminal, que le premier tableau MCS correspond au second type de tableaux MCS si les informations d'indication transportent le champ bler-Target dans la signalisation RRC.

3. Procédé selon la revendication 1, le schéma 2 étant adopté, et la détermination, par le terminal, du type du premier tableau MCS sur la base des informations d'indication comprenant :
lorsque le terminal détermine que le champ bler-Target dans la signalisation RRC transporté par les informations d'indication est une première valeur, la détermination que le premier tableau MCS est le second type de tableaux MCS ; ou
lorsque le terminal détermine que le champ bler-Target dans la signalisation RRC transporté par les informations d'indication est une seconde valeur, la détermination du type du premier tableau MCS sur la base de la valeur du champ cqi-Tableau dans la signalisation RRC transporté par les informations d'indication.

4. Procédé selon l'une quelconque des revendications 1 à 3, le premier type de tableaux MCS comprenant 64QAM et 256QAM ; et le second type de tableaux MCS comprenant au moins un tableau MCS correspondant à une bler-Target de 10⁻⁵.

5. Procédé de détermination d'un tableau MCS, comprenant :
l'envoi (S101), par une station de base, d'une signalisation RRC transportant des informations d'indication à un terminal, pour permettre au terminal de déterminer un premier tableau MCS sur la base des informations d'indication,
les informations d'indication indiquant le premier tableau MCS, et le premier tableau MCS faisant partie d'un ensemble de tableaux MCS comprenant à la fois un premier type de tableaux MCS et un second type de tableaux MCS, le premier type de tableaux MCS étant des tableaux MCS correspondant au service à large bande mobile amélioré, eMBB, et le second type de tableaux MCS étant des tableaux MCS correspondant au service de communications ultra-fiables à faible latence, URLLC ; les informations d'indication étant définies étant selon l'un des schémas suivants :
schéma 1 : les informations d'indication sont un champ cqi-Tableau dans la signalisation RRC, différentes valeurs du champ cqi-Tableau dans la signalisation RRC indiquant différents tableaux MCS, et une valeur correspondant à un tableau MCS ;
schéma 2 : les informations d'indication transportent un champ mcs-Tableau dans la signalisation RRC ; lorsque le premier tableau MCS est le premier type de tableaux MCS, une valeur du champ mcs-Tableau dans la signalisation RRC est en correspondance biunivoque avec chaque tableau MCS dans le premier type de tableaux MCS ; ou lorsque le premier tableau MCS est le second type de tableaux MCS, une valeur du champ mcs-Tableau dans la signalisation RRC est en correspondance biunivoque avec chaque tableau MCS dans le second type de tableaux MCS ;
schéma 3 : les informations d'indication transportent un champ new-mcs-Tableau dans la signalisation RRC configuré pour indiquer le second type de tableaux MCS, et la valeur du champ new-mcs-Tableau dans la signalisation RRC est en correspondance biunivoque avec chaque tableau MCS dans le second type de tableaux MCS ; ou les informations d'indication ne transportent pas le champ new-mcs-Tableau dans la signalisation RRC, et la valeur d'un champ mcs-Tableau dans la signalisation RRC est en correspondance biunivoque avec chaque tableau MCS dans le premier type de tableaux MCS ;
schéma 4 : les informations d'indication comprennent un tableau de service, le tableau de service étant un champ configuré pour indiquer un type d'un tableau MCS, et le tableau de service comprenant au moins un bit ; et lorsque le type indiqué par le tableau de service est le second type, un champ new-mcs-Tableau dans la signalisation RRC est transporté dans les informations d'indication, et une valeur du champ new-mcs-Tableau dans la signalisation RRC est en correspondance biunivoque avec chaque tableau MCS dans le second type de tableaux MCS ; ou lorsque le type indiqué par le tableau de service est le premier type, le champ new-mcs-Tableau dans la signalisation RRC n'est pas transporté dans les informations d'indication, et une valeur d'un champ mcs-Tableau dans la signalisation RRC transporté par les informations d'indication est en correspondance biunivoque avec chaque tableau MCS dans le premier type de tableaux MCS ; le champ new-mcs-Tableau dans la signalisation RRC étant spécialement utilisé pour indiquer le second type de tableaux MCS ;
schéma 5 : les informations d'indication comprennent un tableau de service, le tableau de service est un champ configuré pour indiquer un type d'un tableau MCS, et le tableau de service comprend au moins un bit ; et lorsque le type indiqué par le tableau de service est le second type, la valeur d'un champ mcs-Tableau dans la signalisation RRC transporté par les informations d'indication est en correspondance biunivoque avec chaque tableau MCS dans le second type de tableaux MCS ; ou lorsque le type indiqué par le tableau de service est le premier type, la valeur du champ mcs-Tableau dans la signalisation RRC est en correspondance biunivoque avec chaque tableau MCS dans le premier type de tableaux MCS ;
schéma 6 : les informations d'indication comprennent un tableau de service, le tableau de service est un champ configuré pour indiquer un type d'un tableau MCS, et le tableau de service comprend au moins un bit ; et lorsque le type indiqué par le tableau de service est le second type, et que le second type de tableaux MCS ne comprend qu'un tableau MCS, le premier tableau MCS est le seul tableau MCS compris dans le second type de tableaux MCS ;
schéma 7 : les informations d'indication sont un champ mcs-Tableau dans la signalisation RRC, le champ mcs-Tableau dans la signalisation RRC comprend au moins deux bits, différentes valeurs du champ mcs-Tableau dans la signalisation RRC sont configurées pour indiquer différents tableaux MCS, et une valeur correspond à un tableau MCS.

6. Procédé selon la revendication 5, le schéma 2 étant adopté, avant que la station de base n'envoie la signalisation RRC transportant les informations d'indication au terminal, le procédé comprenant en outre :
la détermination, par la station de base, d'un type du premier tableau MCS ; et
lorsque la station de base détermine que le premier tableau MCS est le premier type de tableaux MCS, la détermination, par la station de base, qu'un champ bler-Target dans la signalisation RRC n'a pas besoin d'être transporté dans les informations d'indication ; ou
lorsque la station de base détermine que le premier tableau MCS est le second type de tableaux MCS, la détermination par la station de base que le champ bler-Target dans la signalisation RRC doit être transporté dans les informations d'indication.

7. Procédé selon la revendication 5, le schéma 2 étant adopté ; lorsqu'un champ bler-Target dans la signalisation RRC transporté par les informations d'indication est une première valeur, le champ bler-Target dans la signalisation RRC est configuré pour indiquer que le premier tableau MCS est le second type de tableaux MCS ; ou
lorsque le champ bler-Target dans la signalisation RRC transporté par les informations d'indication est une seconde valeur, le champ bler-Target dans la signalisation RRC est configuré pour indiquer que le premier tableau MCS est le second type de tableaux MCS, la première valeur et la seconde valeur étant configurées pour indiquer différents tableaux MCS compris dans le second type de tableaux MCS, respectivement ; ou
lorsque le champ bler-Target dans la signalisation RRC transporté par les informations d'indication est la seconde valeur, le champ bler-Target dans la signalisation RRC est configuré pour indiquer que le premier tableau MCS est le premier type de tableaux MCS.

8. Procédé selon la revendication 5, le schéma 3 étant adopté, avant que la station de base n'envoie la signalisation RRC transportant les informations d'indication au terminal, le procédé comprenant en outre :
la détermination, par la station de base, d'un type du premier tableau MCS ; et
lorsque la station de base détermine que le premier tableau MCS est le second type de tableaux MCS, la détermination, par la station de base, que le champ new-mcs-Tableau dans la signalisation RRC configuré pour indiquer le second type de tableaux MCS doit être transporté dans les informations d'indication, une valeur du champ new-mcs-Tableau dans la signalisation RRC étant en correspondance biunivoque avec chaque tableau MCS dans le second type de tableaux MCS ; ou
lorsque la station de base détermine que le premier tableau MCS est le premier type de tableaux MCS, la détermination par la station de base que le champ new-mcs-Tableau dans la signalisation RRC n'a pas besoin d'être transporté dans les informations d'indication.

9. Procédé selon l'une quelconque des revendications 5 à 8, le premier type de tableaux MCS comprenant 64QAM et 256QAM ; et le second type de tableaux MCS comprenant au moins un tableau MCS correspondant à un champ bler-Target dans la signalisation RRC de 10⁻⁵.

10. Terminal comprenant :
une mémoire (201) configurée pour stocker des instructions ;
un processeur (202), configuré pour lire les instructions dans la mémoire (201) afin d'exécuter les processus suivants :
la réception d'une signalisation RRC transportant des informations d'indication et envoyée par une station de base par l'intermédiaire d'un émetteur-récepteur,
les informations d'indication indiquant un premier tableau MCS, et le premier tableau MCS faisant partie d'un ensemble de tableaux MCS comprenant à la fois un premier type de tableaux MCS et un second type de tableaux MCS, le premier type de tableaux MCS étant des tableaux MCS correspondant au service à large bande mobile amélioré, eMBB, et le second type de tableaux MCS étant des tableaux MCS correspondant au service de communications ultra-fiables à faible latence, URLLC ; et
le processeur (202) étant en outre configuré pour lire les instructions dans la mémoire (201) afin d'exécuter :
la détermination du premier tableau MCS sur la base des informations d'indication ; et
un émetteur-récepteur (203), configuré pour recevoir et envoyer des données sous la commande du processeur (202) ; le processeur (202) étant en outre configuré pour lire les instructions dans la mémoire (201) pour :
lorsque les informations d'indication sont un champ cqi-Tableau dans la signalisation RRC, déterminer le premier tableau MCS correspondant à une valeur du champ cqi-Tableau dans la signalisation RRC sur la base de la valeur du champ cqi-Tableau dans la signalisation RRC, différentes valeurs du champ cqi-Tableau dans la signalisation RRC indiquant différents tableaux MCS, et une valeur correspondant à un tableau MCS ; ou
déterminer un type du premier tableau MCS sur la base des informations d'indication ; et lorsque le premier tableau MCS est déterminée comme étant le premier type de tableaux MCS, déterminer le premier tableau MCS à partir du premier type de tableaux MCS sur la base d'un champ mcs-Tableau dans la signalisation RRC transporté par les informations d'indication, une valeur du champ mcs-Tableau dans la signalisation RRC étant en correspondance biunivoque avec chaque tableau MCS dans le premier type de tableaux MCS ; ou lorsque le premier tableau MCS est déterminé comme étant le second type de tableaux MCS, déterminer le premier tableau MCS à partir du second type de tableaux MCS sur la base du champ mcs-Tableau dans la signalisation RRC transporté par les informations d'indication, une valeur du champ mcs-Tableau dans la signalisation RRC étant en correspondance biunivoque avec chaque tableau MCS dans le second type de tableaux MCS ; ou
lorsqu'il est déterminé que les informations d'indication transportent un champ new-mcs-Tableau dans la signalisation RRC configuré pour indiquer le second type de tableaux MCS, déterminer le premier tableau MCS à partir du second type de tableaux MCS sur la base de la valeur du champ new-mcs-Tableau dans la signalisation RRC, la valeur du champ new-mcs-Tableau dans la signalisation RRC étant en correspondance biunivoque avec chaque tableau MCS dans le second type de tableaux MCS ; ou lorsqu'il est déterminé que les informations d'indication ne transportent pas le champ new-mcs-Tableau dans la signalisation RRC, déterminer le premier tableau MCS à partir du premier type de tableaux MCS sur la base de la valeur d'un champ mcs-Tableau dans la signalisation RRC transporté par les informations d'indication, la valeur du champ mcs-Tableau dans la signalisation RRC étant en correspondance biunivoque avec chaque tableau MCS dans le premier type de tableaux MCS ; ou
déterminer un type du premier tableau MCS sur la base d'un tableau de service transporté par les informations d'indication, le tableau de service étant un champ configuré pour indiquer un type d'une tableau MCS et le tableau de service comprenant au moins un bit ; et lorsque le premier tableau MCS est déterminé comme étant le second type de tableaux MCS, déterminer le premier tableau MCS à partir du second type de tableaux MCS sur la base d'une valeur du champ new-mcs-Tableau dans la signalisation RRC transporté par les informations d'indication, la valeur du champ new-mcs-Tableau dans la signalisation RRC étant en correspondance biunivoque avec chaque tableau MCS dans le second type de tableaux MCS ; ou lorsque le premier tableau MCS est déterminé comme étant le premier type de tableaux MCS, déterminer le premier tableau MCS à partir du premier type de tableaux MCS sur la base d'une valeur d'un champ mcs-Tableau dans la signalisation RRC transporté par les informations d'indication, la valeur du champ mcs-Tableau dans la signalisation RRC étant en correspondance biunivoque avec chaque tableau MCS dans le premier type de tableaux MCS ; le champ new-mcs-Tableau dans la signalisation RRC étant spécialement utilisé pour indiquer le second type de tableaux MCS ; ou
déterminer un type du premier tableau MCS sur la base d'un tableau de service transporté par les informations d'indication, le tableau de service étant un champ configuré pour indiquer un type d'un tableau MCS, et le tableau de service comprenant au moins un bit ; et lorsque le premier tableau MCS est déterminé comme étant le second type de tableaux MCS, déterminer le premier tableau MCS à partir du second type de tableaux MCS sur la base d'une valeur d'un champ mcs-Tableau dans la signalisation RRC transporté par les informations d'indication, la valeur du champ mcs-Tableau dans la signalisation RRC étant en correspondance biunivoque avec chaque tableau MCS dans le second type de tableaux MCS ; ou lorsque le premier tableau MCS est déterminé comme étant le premier type de tableaux MCS, déterminer le premier tableau MCS à partir du premier type de tableaux MCS sur la base d'une valeur du champ mcs-Tableau dans la signalisation RRC transporté par les informations d'indication, la valeur du champ mcs-Tableau dans la signalisation RRC étant en correspondance biunivoque avec chaque tableau MCS dans le premier type de tableaux MCS ; ou
déterminer un type du premier tableau MCS sur la base d'un tableau de service transporté par les informations d'indication, le tableau de service étant un champ configuré pour indiquer un type d'un tableau MCS, et le tableau de service comprenant au moins un bit ; et lorsque le premier tableau MCS est le second type de tableaux MCS et que le second type de tableaux MCS ne comprend qu'un seul tableau MCS, déterminer que le premier tableau MCS est le seul tableau MCS compris dans le second type de tableaux MCS ; ou
lorsque les informations d'indication sont un champ mcs-Tableau dans la signalisation RRC, déterminer le premier tableau MCS correspondant à une valeur du champ mcs-Tableau dans la signalisation RRC sur la base de la valeur du champ mcs-Tableau dans la signalisation RRC, le champ mcs-Tableau dans la signalisation RRC comprenant au moins deux bits, différentes valeurs du champ mcs-Tableau dans la signalisation RRC étant configurées pour indiquer différents tableaux MCS, et une valeur correspondant à un tableau MCS.

11. Terminal selon la revendication 10, le premier type de tableaux MCS comprenant 64QAM et 256QAM ; et le second type de tableaux MCS comprenant au moins un tableau MCS correspondant à un champ bler-Target dans la signalisation RRC de 10⁻⁵.

12. Station de base comprenant :
une mémoire (301), configurée pour stocker des instructions ; un processeur (302), configuré pour lire les instructions dans la mémoire (301) afin d'exécuter le procédé selon l'une quelconque des revendications 5 à 9 ; et un émetteur-récepteur (303), configuré pour recevoir et envoyer des données sous la commande du processeur (302).
